# FASCICULE DE BREVET EUROPEEN

(11) **EP 3 739 253 B1**
(45) Date de publication et mention de la délivrance du brevet: **29.12.2021**
(21) Numéro de dépôt: 20174292.1
(22) Date de dépôt: 13.05.2020
(51) Int. Cl.: F16L 37/23, F16K 39/02, F16L 37/34, F16L 37/22, F16L 37/35

(54) **ELÉMENT FEMELLE ET RACCORD FLUIDIQUE**
AUFNAHMEELEMENT UND FLUIDANSCHLUSS
FEMALE ELEMENT AND FLUID CONNECTOR

(30) Priorité: 14.05.2019 FR 1904996
(43) Date de publication de la demande: 18.11.2020
(73) Titulaire: Staubli Faverges, 74210 Faverges-Seythenex (FR)
(72) Inventeur: TIBERGHIEN, Alain-Christophe, 74320 SEVRIER (FR); DURIEUX, Christophe, 73200 GILLY SUR ISERE (FR); MAYER, Romain, 73400 HERY SUR UGINE (FR)
(74) Mandataire: Lavoix

(56) Documents cités:
- EP-A1- 3 184 871
- FR-A1- 2 991 424
- US-A- 2 433 119

## Description

La présente invention concerne un élément femelle, pour un raccord fluidique conçu pour la jonction de canalisations de fluide sous pression, ainsi qu'un raccord fluidique comprenant un tel élément femelle.

L'invention se rapporte notamment au domaine des raccords rapides, pour connecter des conduites de fluide caloporteur destiné au refroidissement d'installations de serveurs informatiques, ou de systèmes électroniques ou électrotechniques similaires.

La connexion d'une conduite d'alimentation d'une baie informatique en liquide de refroidissement nécessite l'accouplement d'un ou plusieurs raccords, pour réaliser des circuits et/ou des boucles de distribution du liquide de refroidissement. Chaque raccord est constitué d'un élément mâle, qui est fixé côté baie, et d'un élément femelle, côté alimentation, l'élément mâle étant relié à une conduite de refroidissement et l'élément femelle étant relié à une conduite d'alimentation.

En général, la connexion des raccords est réalisée manuellement, ce qui peut nécessiter un temps d'installation et de désinstallation conséquent. Ainsi, lorsque le profil de l'élément mâle le permet, on prévoit généralement un élément femelle à billes de verrouillage, pour former un raccord automatique avec l'élément mâle, dit « raccord rapide ». Ce type de raccord rapide satisfait habituellement à cette utilisation en permettant une connexion facilitée. Toutefois, ce type de raccord est susceptible de présenter certains inconvénients d'encombrement ou de manipulation à la déconnexion.

FR 2 991 424 A1 décrit un embout de raccord femelle à billes de verrouillage, qui comprend une bague mobile dans le corps principal de l'embout femelle, pour libérer des billes de verrouillage ou les maintenir dans une position de déverrouillage. Cependant, du fait du contact et maintien radial de la bague mobile sur les éléments de verrouillage, la course de la bague est importante et nécessite de prévoir un espace annulaire relativement long au sein du corps principal de l'embout femelle. Par conséquent, cet embout femelle connu est relativement encombrant dans le sens axial et dans le sens radial.

US 2 433 119 décrit un organe de raccord femelle, constitué d'un corps avec des logements cylindriques inclinés par rapport à l'axe de l'organe de raccord femelle. On prévoit un rouleau cylindrique creux dans chacun de ces logements cylindriques, apte à coopérer avec un épaulement incliné de l'organe mâle, dans le but de maintenir les organes mâle et femelle en relation d'accouplement. Chaque rouleau est repoussé vers l'axe de l'organe femelle par un ressort individuel, pour maintenir le rouleau en appui contre une extrémité inclinée d'une manche intérieure, appartenant à un ensemble de manche, et en coopération avec l'épaulement incliné de l'organe mâle. En tirant sur l'ensemble de manche, les rouleaux sont entraînés vers l'extérieur par la manche intérieure, pour déverrouiller l'organe mâle.

Cependant, cet organe de raccord femelle connu présente de nombreux inconvénients. L'action individuelle de chaque ressort sur son cylindre creux respectif rend le verrouillage et le déverrouillage incertains et potentiellement difficiles physiquement, dans la mesure où chaque cylindre creux et/ou son ressort respectif est susceptible de se coincer dans le logement cylindrique concerné, par arc-boutement, pollution des surfaces, et/ou usure des pièces. Dans cet organe de raccord femelle connu, la disposition des pièces présente en outre un encombrement radial relativement important.

L'invention vise à résoudre les inconvénients de l'art antérieur en proposant un nouvel élément femelle qui, tout en présentant un encombrement particulièrement faible, offre un verrouillage et un déverrouillage particulièrement fiables et facilités.

L'invention a pour objet un élément femelle, pour un raccord fluidique conçu pour la jonction de canalisations de fluide sous pression, l'élément femelle étant configuré pour être accouplé avec un élément mâle complémentaire, appartenant au raccord fluidique, l'élément femelle comprenant :
- un corps femelle, définissant un canal d'insertion de l'élément mâle, le canal d'insertion définissant un axe central du corps femelle ;
- des éléments de verrouillage, qui sont reçus dans des logements respectifs ménagés dans l'épaisseur du corps femelle, chaque logement étant incliné par rapport à l'axe central et débouchant dans le canal d'insertion, chaque élément de verrouillage étant mobile par rapport au corps femelle, entre une position distale, dans laquelle ledit élément de verrouillage dépasse radialement dans le canal d'insertion, et une position proximale, dans laquelle ledit élément de verrouillage est en retrait du canal d'insertion ; et
- une bague de manœuvre, qui entoure le corps femelle et qui est mobile en translation par rapport au corps femelle le long de l'axe central, entre une position avancée et une position reculée, la bague de manœuvre comprenant un manchon interne qui est au moins partiellement reçu dans le canal d'insertion, le manchon interne étant configuré pour :
   ∘ entraîner les éléments de verrouillage jusqu'à leur position proximale, lorsque la bague de manœuvre est déplacée de sa position avancée vers sa position reculée,
   ∘ interdire aux éléments de verrouillage d'adopter leur position distale lorsque la bague de manœuvre est en position reculée, et
   ∘ autoriser les éléments de verrouillage à adopter leur position distale lorsque la bague de manœuvre est en position avancée.

Selon l'invention :
- l'élément femelle comprend en outre :
   ∘ un poussoir de rappel, qui est intercalé radialement entre la bague de manœuvre et le corps femelle, qui est mobile par rapport au corps femelle et qui est destiné à ramener les éléments de verrouillage vers leur position distale, le poussoir de rappel étant mobile entre une position avant, dans laquelle les éléments de verrouillage sont dans leur position distale, et une position arrière, dans laquelle le poussoir de rappel laisse les éléments de verrouillage librement mobiles entre leur position distale et leur position proximale, et
   ∘ un organe élastique, qui exerce un effort de rappel tendant à ramener le poussoir de rappel vers sa position avant ; et
- la bague de manœuvre est configurée pour entraîner le poussoir de rappel vers sa position arrière, de telle sorte que le poussoir de rappel n'exerce pas d'effort de rappel sur les éléments de verrouillage lorsque la bague de manœuvre est déplacée de sa position avancée vers sa position reculée.

Une idée à la base de l'invention est de prévoir que l'effort de rappel généré par l'organe élastique est transmis aux éléments de verrouillage par l'intermédiaire du poussoir de rappel. En d'autres termes, le poussoir de rappel sert de moyen de transmission d'effort. Puisque l'effort de rappel est transmis par le poussoir de rappel, on peut avantageusement prévoir que l'organe élastique est orienté parallèlement à l'axe central, de façon que l'élément femelle est radialement compact. Grâce à l'invention, on peut avantageusement concevoir que le poussoir de rappel est repoussé uniquement par l'organe élastique, lui-même constitué d'un unique ressort. La fabrication de l'élément femelle est alors facilitée, par réduction du nombre de pièces, et l'encombrement est réduit. En outre, l'unique organe élastique peut plus facilement être conçu pour présenter une grande résistance à l'usure, comparativement à une pluralité d'organes élastiques individuels de plus petite dimension. Durant l'utilisation de l'élément femelle selon l'invention, la présence du poussoir de rappel permet avantageusement de prévoir que la bague de manœuvre entraîne le poussoir de rappel à l'écart des éléments de verrouillage lorsque la bague de manœuvre est déplacée vers sa position arrière, de sorte que le poussoir de rappel n'applique plus l'effort de rappel sur les éléments de verrouillage durant le déverrouillage, cet effort de rappel étant alors préférentiellement repris par la bague de manœuvre. On pourrait prévoir que cet effort de rappel est repris par une autre pièce que la bague de manœuvre elle-même. Le poussoir de rappel n'exerçant pas l'effort de rappel sur les éléments de verrouillage lors du déverrouillage, les éléments de verrouillage sont déchargés de l'effort de rappel et ne risquent pas de se coincer dans leur logement respectif. Egalement, le recul direct du poussoir de rappel s'affranchit des composantes de frottement des éléments de verrouillage s'ils étaient soumis à l'effort de rappel de la bague au stade de la manœuvre de déverrouillage. L'usure des éléments de verrouillage et des logements en est réduite. Le déverrouillage de l'élément femelle est alors particulièrement fiable et aisé. En outre, l'organe élastique appliquant avantageusement un effort purement axial, l'effort à appliquer sur la bague de manœuvre pour effectuer le déverrouillage est moindre, comparativement à l'art antérieur où des organes élastiques inclinés étaient prévus. Les éléments de verrouillage et les logements étant maintenus en bon état, le verrouillage est également particulièrement fiable et aisé.

Des caractéristiques préférentielles de l'invention sont définies dans ce qui suit :
- la bague de manœuvre est configurée pour entraîner le poussoir de rappel vers sa position arrière, à l'écart des éléments de verrouillage, lorsque la bague de manœuvre est déplacée de sa position avancée vers sa position reculée.
- le poussoir de rappel est une bague de rappel mobile en translation par rapport au corps femelle, le long de l'axe central, et destinée à ramener les éléments de verrouillage vers leur position distale sous l'action de l'effort de rappel lorsque la bague de rappel est en appui contre les éléments de verrouillage.
- le corps femelle constitue une butée du poussoir de rappel dans sa position avant.
- le manchon interne comprend une paroi proximale, par l'intermédiaire de laquelle le manchon interne entraîne les éléments de verrouillage de leur position distale jusqu'à leur position proximale, lorsque la bague de manœuvre est déplacée de sa position avancée à sa position reculée.
- le poussoir de rappel comprend une face avant inclinée, par l'intermédiaire de laquelle le poussoir de rappel est apte à venir en butée contre les éléments de verrouillage.
- la face avant inclinée ou la paroi proximale est tenue à distance des éléments de verrouillage, de sorte à autoriser un déplacement des éléments de verrouillage entre la face avant inclinée et la paroi proximale lorsque la bague de manœuvre est déplacée de sa position avancée vers sa position reculée.
- la paroi proximale est inclinée par rapport à l'axe central, d'un angle compris entre 20 degrés et 70 degrés, préférentiellement égal à 45 degrés.
- chaque élément de verrouillage est mobile entre sa position proximale et sa position distale selon un axe de déplacement respectif, qui est incliné par rapport à l'axe central, d'un angle compris entre 20 degrés et 70 degrés, de préférence égal à 45 degrés.
- les éléments de verrouillage prennent appui sur le manchon interne, lorsque les éléments de verrouillage sont en position distale.
- chaque élément de verrouillage prend appui sur une butée annulaire respective du corps femelle, lorsque ledit élément de verrouillage est en position distale.
- le poussoir de rappel est configuré pour venir en appui contre la bague de manœuvre, le poussoir de rappel tendant à ramener la bague de manœuvre vers la position avancée sous l'action de l'effort de rappel, lorsque le poussoir de rappel est en appui contre la bague de manœuvre.
- le manchon interne forme une paroi interne avant, de forme cylindrique centrée sur l'axe central.
- le corps femelle forme une paroi interne arrière, délimitant une partie du canal d'insertion, la paroi interne arrière étant de forme cylindrique centrée sur l'axe central.
- la paroi interne avant et la paroi interne arrière sont de diamètre égal et sont agencées dans le prolongement l'une de l'autre.
- chaque élément de verrouillage est formé par une bille respective.
- chaque élément de verrouillage est formé par un rouleau cylindrique respectif.
- l'élément femelle comprend : un piston central, disposé à l'intérieur du canal d'insertion en étant fixe par rapport au corps femelle, le piston central présentant une première face avant ; et un tiroir d'obturation, radialement intercalé entre le canal d'insertion et le piston central, en étant mobile par rapport au corps femelle entre une position avancée, dans laquelle le tiroir d'obturation obture fluidiquement le canal d'insertion, et une position reculée, dans laquelle le tiroir d'obturation libère fluidiquement le canal d'insertion, le tiroir d'obturation présentant une deuxième face avant, la première face avant et la deuxième face avant s'étendant dans un même plan perpendiculaire à l'axe central lorsque le tiroir d'obturation est dans la position avancée.

L'invention a également pour objet un raccord fluidique, conçu pour la jonction de canalisations de fluide sous pression, le raccord fluidique comprenant un élément femelle selon ce qui précède et un élément mâle complémentaire, avec lequel l'élément femelle est configuré pour être accouplé, l'élément mâle comprenant un corps mâle qui est apte à être reçu dans le canal d'insertion du corps femelle au travers du manchon interne, à pousser les éléments de verrouillage dans leur position proximale lorsque le corps mâle est reçu dans le canal d'insertion, et à coopérer avec les éléments de verrouillage lorsque les éléments de verrouillage sont en position distale, pour empêcher le retrait axial du corps mâle hors du canal d'insertion.

Des caractéristiques préférentielles de l'invention sont définies dans ce qui suit :
- le corps mâle comprend une première surface, apte à repousser les éléments de verrouillage dans leur position proximale lorsque l'élément mâle est reçu dans le canal d'insertion du corps femelle, la première surface présentant de préférence une forme conique convergeant vers l'avant de l'élément mâle.
- le corps mâle comprend une deuxième surface, apte à coopérer avec les éléments de verrouillage, alors que les éléments de verrouillage sont en position distale, pour empêcher le retrait axial du corps mâle hors du canal d'insertion, la deuxième surface étant préférentiellement inclinée selon un angle compris entre 20 degrés et 70 degrés, par exemple égal à 45 degrés, par rapport à un axe central de l'élément mâle défini le long du corps mâle, l'axe central de l'élément mâle et l'axe central de l'élément femelle étant coaxiaux lorsque le corps mâle est reçu dans le canal d'insertion du corps femelle.
- le corps mâle comprend une collerette, la première surface étant formée à l'avant de la collerette, la deuxième surface étant formée à l'arrière de la collerette.
- dans lequel la deuxième surface du corps mâle et la paroi proximale du manchon interne de l'élément femelle sont inclinés par rapport à l'axe central de leur élément mâle ou femelle respectif, d'un angle égal, cet angle étant de préférence égal à 45 degrés.

D'autres caractéristiques de l'invention ressortent plus en détail de la description qui suit, présentant des modes de réalisation préférentiels de l'invention sans but limitatif, cette description faisant référence aux dessins annexés listés ci-dessous :
[Fig 1] La figure 1 montre un raccord selon un premier mode de réalisation conforme à l'invention, le raccord étant dans une configuration désaccouplée et comprenant un élément mâle et un élément femelle définissant un axe central, où l'élément mâle est montré en coupe le long d'un plan radial et où l'élément femelle est montré, au-dessus de l'axe central, en coupe selon un premier plan de coupe radial, et, au-dessous de l'axe central, en coupe selon un second plan de coupe radial perpendiculaire au premier plan de coupe radial.
[Fig 2] La figure 2 montre le raccord de la figure 1 dans un premier stade d'accouplement, en coupe selon le premier plan de coupe au-dessus de l'axe central et en coupe selon le second plan de coupe au-dessous de l'axe central.
[Fig 3] La figure 3 est une vue similaire à la figure 2, où le raccord de la figure 1 est dans deuxième stade d'accouplement successif au premier stade d'accouplement.
[Fig 4] La figure 4 est une vue similaire à la figure 3, où le raccord de la figure 1 est dans une configuration accouplée.
[Fig 5] La figure 5 est une vue similaire aux figures 2 à 4, où le raccord de la figure 1 est dans un premier stade de désaccouplement.
[Fig 6] La figure 6 est une vue similaire à la figure 5, où le raccord de la figure 1 est dans un deuxième stade de désaccouplement successif au premier stade de désaccouplement.
[Fig 7] La figure 7 est une vue similaire à la figure 1 d'un raccord selon un deuxième mode de réalisation conforme à l'invention, le raccord étant dans une configuration désaccouplée.
[Fig 8] La figure 8 est une vue similaire à la figure 4, du raccord de la figure 7, dans une configuration accouplée.
[Fig 9] La figure 9 est une vue similaire à la figure 5, où le raccord de la figure 7 est dans un premier stade de désaccouplement.
[Fig 10] La figure 10 est une vue similaire à la figure 6, où le raccord de la figure 7 est dans un deuxième stade de désaccouplement successif au premier stade de désaccouplement.

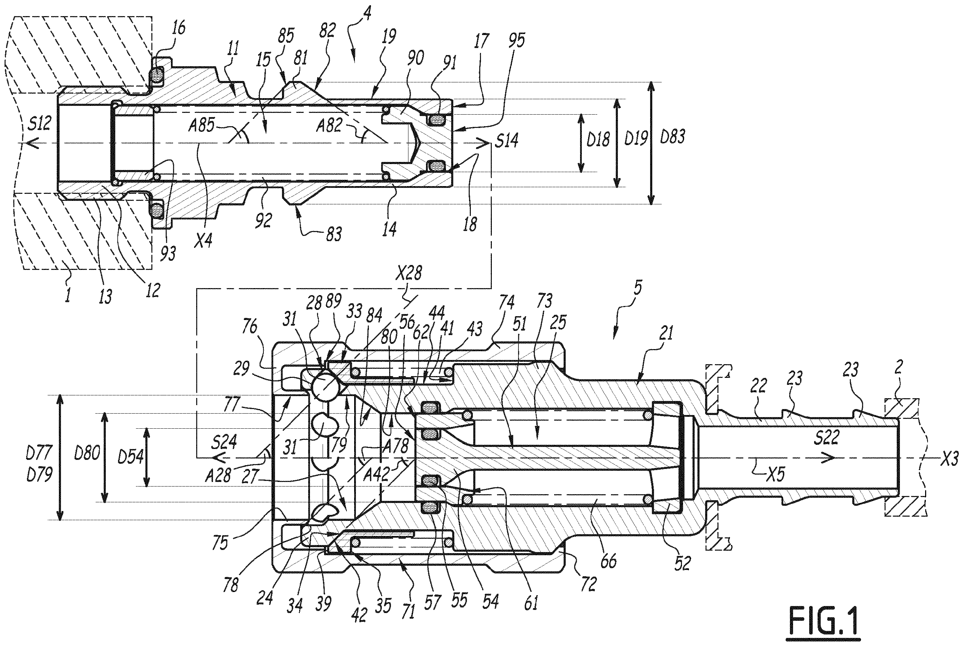

Les figures 1 à 6 montrent un raccord fluidique selon un premier mode de réalisation. Le raccord est conçu pour la jonction d'une canalisation 1 de fluide sous pression, et d'une canalisation 2 de fluide sous pression, montrées en traits discontinus sur la figure 1. Le fluide sous pression est par exemple un liquide caloporteur.

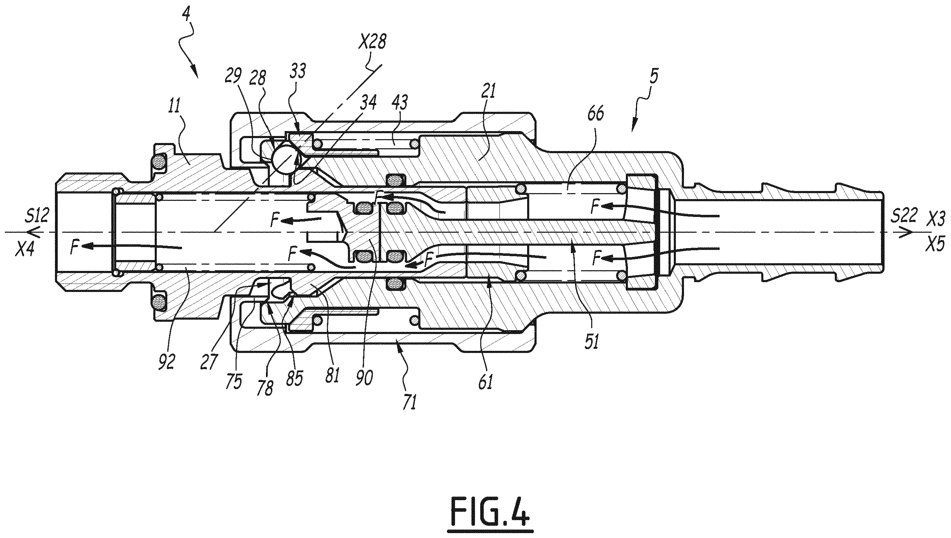

Le raccord fluidique comprend un élément mâle 4, ou about mâle, et un élément femelle 5, qui sont complémentaires et qui sont tous deux coaxiaux avec un axe central X3 du raccord, lorsque les éléments 4 et 5 sont dans une configuration accouplée, comme montré sur la figure 4. L'élément mâle 4 et l'élément femelle 5 définissent chacun un axe central X4 et X5 respectif, qui est confondu avec l'axe central X3 lorsque les éléments 4 et 5 sont en configuration accouplée. Sur la figure 1, les éléments 4 et 5 sont montrés dans une configuration désaccouplée.

En configuration accouplée, le fluide sous pression délivré par la canalisation 2 circule au sein de l'élément femelle 5, puis de l'élément mâle 4, pour être reçu par la canalisation 1, parallèlement à l'axe central X3, comme montré par les flèches F de la figure 4. On peut utiliser le raccord dans une configuration où le fluide circule en sens inverse. En configuration désaccouplée, l'élément mâle 4 obture la canalisation 1 et l'élément femelle 5 obture la canalisation 2, de sorte que la circulation du fluide est interrompue et ne fuit pas par les extrémités des canalisations 1 et 2.

On prévoit avantageusement que l'élément mâle 4 appartient à une installation réceptrice, par exemple une baie informatique, vers laquelle le fluide doit être acheminé, ou de laquelle le fluide doit être extrait. On pourrait au contraire prévoir que l'élément femelle 5 appartient à cette installation réceptrice.

L'élément mâle 4 comprend un corps mâle 11 tubulaire, coaxial avec l'axe X4. Le corps 11 est avantageusement monobloc.

Le long de l'axe X4, le corps mâle 11 comprend une partie extrémale arrière 12, conçue pour être connectée à la canalisation 1, par exemple par vissage de la canalisation 1 sur un filetage externe 13 de la partie 12. L'étanchéité entre le corps mâle 11 et la canalisation 1 est avantageusement obtenue grâce à un joint 16 de l'élément mâle 4, porté par le corps 11. Le corps mâle 11 comprend une partie extrémale avant 14, conçue pour être reçue par l'élément femelle 5 en configuration accouplée. L'élément mâle 4 définit une direction avant S14, parallèle à l'axe X4, allant de la partie 12 à la partie 14, et une direction arrière S12, en sens opposé.

Le corps mâle 11 définit un conduit interne 15 pour la circulation du fluide, le conduit 15 étant coaxial avec l'axe X4, débouchant à la partie extrémale 12 dans la direction S12, le cas échéant, dans le conduit 1, et débouchant à la partie extrémale 14 dans la direction S14, les cas échéant, dans l'élément femelle 5.

L'élément femelle 5 comprend un corps femelle 21 tubulaire, coaxial avec l'axe X5. Le corps 21 est avantageusement monobloc.

Le long de l'axe X5, le corps femelle 21 comprend une partie extrémale arrière 22, ou queue arrière, conçue pour être connectée à la canalisation 2, par exemple par emmanchement de la canalisation 2 sur une série de crans 23 de la partie 22. Le corps femelle 21 comprend une partie extrémale avant 24, conçue pour recevoir l'élément mâle 4, en configuration accouplée, en particulier le corps mâle 11. L'élément femelle 5 définit une direction avant S24, parallèle à l'axe X5, allant de la partie 22 à la partie 24, et une direction arrière S22, en sens opposé.

Le corps 21 définit un conduit interne 25 pour la circulation du fluide, le conduit 25 étant coaxial avec l'axe X5, débouchant à la partie extrémale 22 dans la direction S22, le cas échéant, dans le conduit 2, et débouchant à la partie extrémale 24 dans la direction S24, les cas échéant, dans l'élément femelle 5.

En particulier, une partie du conduit interne 25, s'étendant dans la direction S22 à partir du débouchant de la partie extrémale 24 du conduit 25, forme un canal d'insertion 27, où la partie 14 du corps mâle 11 est reçue lorsque le raccord est en configuration accouplée, comme montré sur la figure 4. L'axe X5 est défini par ce canal 27, qui lui est coaxial.

De préférence, l'élément femelle 5 comprend un piston central 51, qui est disposé, au moins en partie, à l'intérieur du canal d'insertion 27, axialement au niveau d'une paroi cylindrique 80 du corps femelle 21 délimitant en partie le canal 27. Le piston 51 comprend une embase arrière 52, par l'intermédiaire de laquelle le piston 51 est attaché, par exemple par vissage, au corps femelle, de sorte que le piston 51 est fixe par rapport au corps femelle 21. L'embase arrière 52 est traversée par différentes ouvertures débouchantes dans la direction S24 et S22, pour garantir la continuité du passage de fluide à travers le conduit interne 25. Le piston central 51 comprend une tête avant 54, centrée sur l'axe X5, portant avantageusement un joint d'étanchéité périphérique 55 et présentant une face avant 56, qui s'étend ici dans un plan orthogonal à l'axe X5 et est orientée dans la direction S24. Un espace annulaire coaxial avec l'axe X5 est radialement ménagé entre d'une part le canal 27, en particulier un joint d'étanchéité 57 de l'élément femelle 5 porté par la paroi cylindrique 80 du canal 27, et la tête 54, en particulier le joint d'étanchéité 55 porté par la tête, pour permettre le passage du fluide en configuration accouplée du raccord. Les joints 55 et 57 sont avantageusement agencés dans un même plan perpendiculaire à l'axe X5, en étant coaxiaux.

L'élément femelle 5 comprend un tiroir d'obturation 61, qui présente une forme annulaire et est radialement disposé autour du piston central 51. Le tiroir 61 est mobile parallèlement à l'axe X5 par rapport au corps femelle 21, entre une position avancée montrée sur la figure 1, dans laquelle le tiroir d'obturation 61 obture fluidiquement le canal d'insertion 27 en obturant l'espace annulaire par coopération avec les joints 55 et 57, et une position reculée, dans laquelle le tiroir d'obturation 61 libère fluidiquement le canal d'insertion 27 en étant décalé dans la direction S22 par rapport à la tête 54 du piston 51. Au moins pour sa position avant, le tiroir d'obturation 61 est intercalé entre le canal d'insertion 27 et le piston central 51. Le tiroir d'obturation 61 présente une face avant 62 qui s'étend dans le même plan perpendiculaire à l'axe central X5 que la face avant 56 que la face lorsque le tiroir d'obturation 61 est dans la position avancée, de telle sorte que l'élément femelle 5 peut être qualifié d'élément de raccord face plane. L'élément femelle 5 comprend un organe élastique 66 qui exerce un effort de rappel du tiroir 61 vers la position avant. L'organe 66 est avantageusement disposé dans le conduit interne 25, en étant axialement interposé entre le tiroir d'obturation 61 et l'embase 52 du piston 51.

Le corps femelle 21 définit une pluralité de logements 28, qui sont ménagés dans l'épaisseur de la partie extrémale avant 24 du corps femelle 21 en étant répartis, de préférence régulièrement, autour de l'axe central X5, dans un même plan orthogonal à l'axe X5. Chaque logement 28 est traversant, en débouchant d'une part dans le canal 27 et d'autre part à l'extérieur du corps 21.

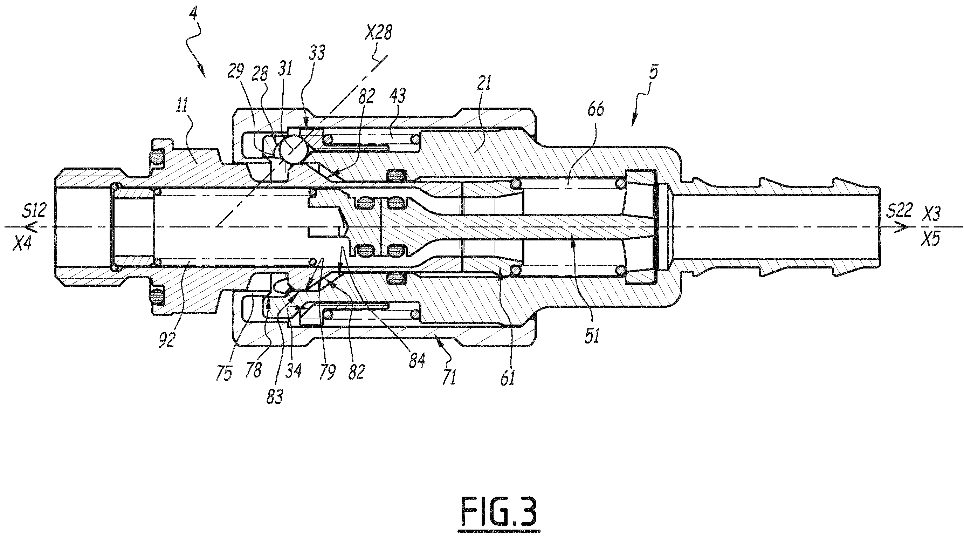

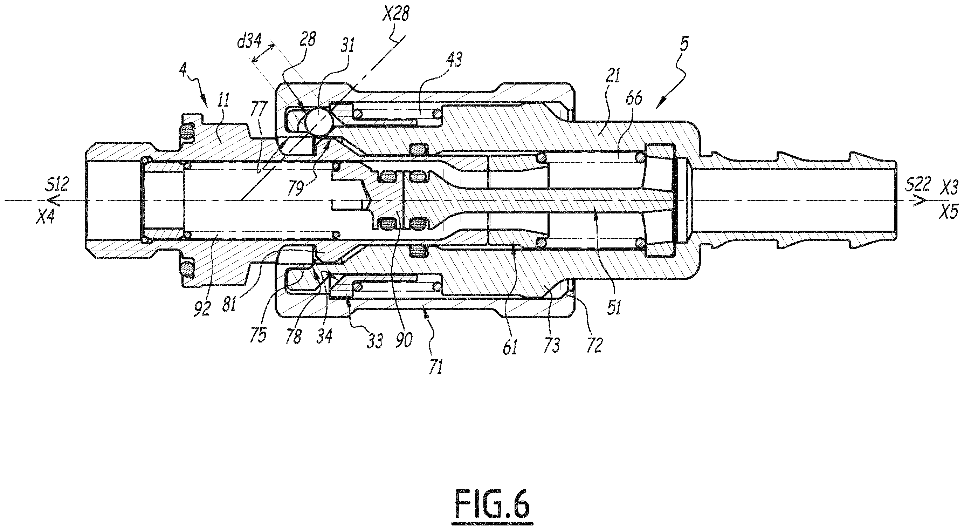

L'élément femelle 5 comprend des éléments de verrouillage 31, ici six éléments de verrouillage 31, qui se présentent par exemple chacun sous la forme d'une bille. Chaque élément de verrouillage 31 est individuellement reçu dans l'un des logements 28. Chaque élément de verrouillage 31 est mobile par rapport au corps femelle 21, en étant guidé par son logement 28 respectif le long d'un axe de déplacement X28 respectif. Les logements 28 sont inclinés par rapport à l'axe central X5, c'est-à-dire que chaque logement 28 est conformé pour guider son élément 31 le long d'un axe X28 qui est compris dans un plan respectif comprenant l'axe X5, l'axe X28 n'étant ni radial ni axial vis-à-vis de l'axe X5. Les axes X28 des logements 28 sont concourants en un même point de l'axe X5. Préférentiellement, chaque logement 28 est en partie de forme cylindrique coaxial à l'axe X28 pour guider l'élément 31. Chaque axe X28 est incliné d'un angle A28 par rapport à l'axe X5, compris entre 20 degrés et 70 degrés, de préférence égal à 45 degrés. Le long de son axe X28 respectif, chaque élément 31 est mobile par rapport au corps 21 entre une position distale montrée sur les figures 1 et 4, où l'élément 31 s'est déplacé à la fois dans la direction S24 et également radialement vers l'axe X5, et une position proximale montrée sur les figures 3 et 6, où l'élément 31 s'est déplacé à la fois dans la direction S22 et à l'écart de l'axe X5.

En position distale, l'élément de verrouillage 31 dépasse radialement dans le canal 27. Pour chaque élément de verrouillage 31, la position distale correspond préférentiellement à une plage de mouvement de l'élément de verrouillage 31 par rapport au corps femelle 21 le long de l'axe X28 concerné, où l'élément de verrouillage 31 dépasse radialement dans le canal 27. Dans le mode de réalisation des figures 1 à 6, lorsqu'il est en position distale, chaque élément de verrouillage 31 est borné dans son déplacement dans la direction S24 contre une butée annulaire 29 respective du corps femelle 21, ici formée à une extrémité du logement 28 recevant ledit élément 31. La butée annulaire 29 se présente par exemple sous la forme d'une réduction de diamètre progressive du logement 28 le long de l'axe X28 en direction de l'axe X5, prolongeant l'extrémité de sa forme cylindrique. En position distale, l'élément 31 dépasse dans le canal 25 au travers de la butée annulaire 29.

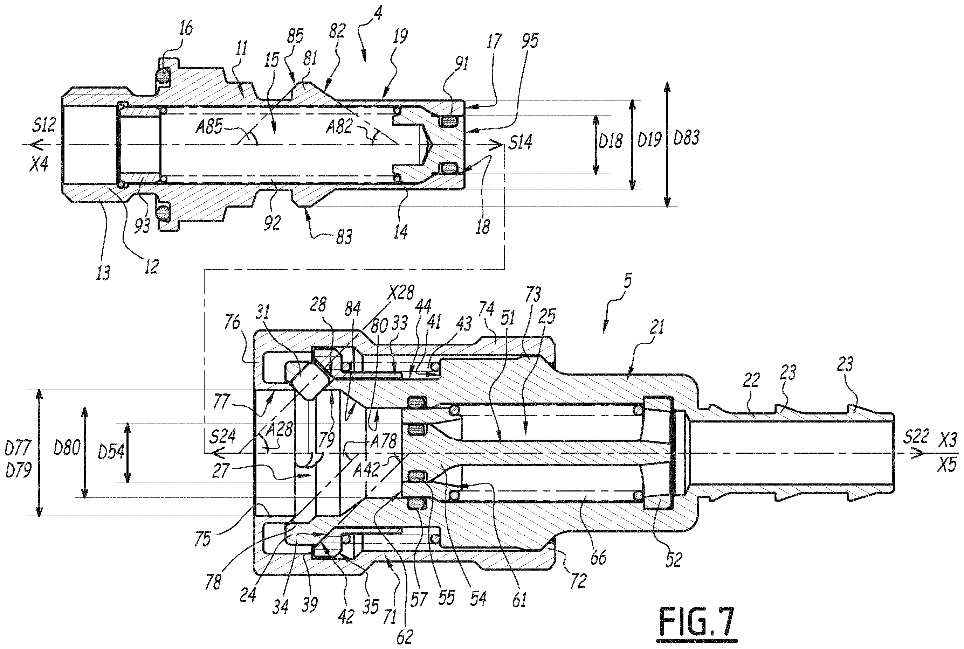

En variante, on prévoit que chaque logement 28 est dépourvu de butée 29, l'élément de verrouillage 31 venant en butée en direction S24, en position distale, contre une autre partie de l'élément femelle 5, comme cela est par exemple décrit ci-après pour le mode de réalisation des figures 7 à 10.

En position proximale, l'élément de verrouillage 31 est en retrait du canal d'insertion 27, c'est-à-dire qu'il est escamoté dans son logement 28 de façon à ne pas dépasser dans le canal d'insertion 27. En variante, on prévoit que, en position proximale, l'élément de verrouillage 31 dépasse dans le canal d'insertion 27, mais de façon moindre qu'en position distale.

L'élément femelle 5 comprend un poussoir de rappel 33, qui se présente ici sous la forme d'une bague de rappel coaxiale avec l'axe X5, entourant la partie extrémale avant 24 du corps femelle 21. Le poussoir 33 est avantageusement monobloc. Le poussoir 33 est monté mobile en translation par rapport au corps femelle 21, parallèlement à l'axe X5, en étant guidé par coulissement du poussoir 33 le long d'une paroi radiale externe 44 du corps femelle 21, la paroi 44 s'étendant dans la direction S22 à partir des logements 28. Le poussoir 33 est mobile entre une position avant dans la direction S24, montrée sur les figures 1 et 4, et une position arrière dans la direction S22, montrée sur la figure 6.

Dans la position arrière de la figure 6, le poussoir 33 laisse les éléments de verrouillage 31 librement mobiles entre leurs positions distale et proximale. Notamment, dans son mouvement vers l'arrière et par sa mise à l'écart de sa position avancée, le poussoir 33 a libéré un espace le long de l'axe X28 qui autorise chaque élément de verrouillage 31 à translater dans son logement 28 respectif le long de l'axe X28.

Le corps femelle 21 forme une butée avant du poussoir 33, dans la position avant. Cette butée avant est ici formée par un épaulement incliné avant 42 du corps 21, positionné à une extrémité avant de la paroi 44 et orienté dans la direction S22, en étant incliné par rapport à l'axe X5 avec un angle A42, de sorte que la surface de l'épaulement 42 est perpendiculaire aux axes X28 définis par les logements 28. L'angle A42 est préférentiellement compris entre 20 et 70 degrés, ici 45 degrés. Pour venir en appui dans la direction S24 contre l'épaulement 42, le poussoir 33 comprend une face avant inclinée 34, qui est complémentaire avec l'épaulement incliné avant 42 et vient en butée contre l'épaulement 42. La face avant inclinée 34 est de forme conique et est inclinée par rapport à l'axe X5 selon un angle étal avec l'angle A42. De préférence, la face avant inclinée 34 est orientée perpendiculairement aux axes X28.

Les logements 28 sont avantageusement ménagés à partir de la surface de l'épaulement 42, préférentiellement de sorte que, en position proximale, les éléments de verrouillage 31 dépassent de la surface de l'épaulement 42. Dans la position avant du poussoir de rappel 33, la face 34 du poussoir 33 vient contre le débouché des logements 28 de façon à maintenir les éléments de verrouillage 31 à l'intérieur de leur logement 28 respectif, en position distale. Dans cette situation, chaque élément 31 peut librement se déplacer par rapport au corps femelle 21, le long de l'axe X28, entre la butée annulaire 29 du logement 28 concerné, et la face 34 du poussoir 33. Ainsi, même lorsque le poussoir 33 est en position avant, un jeu de débattement, c'est-à-dire une plage de déplacement, est avantageusement ménagé pour chaque élément de verrouillage 31. Lorsque le poussoir 33 est en position avant, les éléments de verrouillage 31 sont en position distale. On prévoit avantageusement que la butée annulaire 29 est perpendiculaire à l'axe X28 et à la face 34 du poussoir 33.

En variante, on peut prévoir que la mise en butée en position avant du poussoir 33 et la mise en appui du poussoir 33 contre les éléments 31 est assuré par deux surfaces distinctes appartenant au poussoir 33. On peut aussi prévoir que le corps femelle 21 comprend deux surfaces distinctes pour recevoir le poussoir 33 en butée dans la position avant et former le débouché proximal des logements 28.

L'élément femelle 5 comprend un organe élastique 43, qui est préférentiellement formé par un unique ressort hélicoïdal coaxial avec l'axe X5. L'organe 43 est avantageusement disposé radialement autour du corps femelle 21. L'organe 43 est axialement interposé entre, d'une part, le corps femelle 21, par exemple en prenant appui sur un épaulement axial 41, orienté dans la direction S24 et positionné à une extrémité arrière de la paroi 44, ou sur une autre partie du corps femelle 21, et, d'autre part, le poussoir 33, en particulier un épaulement axial 35 du poussoir 33. L'organe élastique 43 exerce un effort de rappel élastique sur le poussoir 33, en prenant appui sur le corps femelle 21, de façon à repousser le poussoir 33 vers sa position avant. Le poussoir 33 peut venir butée, c'est-à-dire en appui, dans la direction S24, par l'intermédiaire de la face avant inclinée 34, contre les éléments de verrouillage 31. Dans le cas où le poussoir 33 forme une bague, l'effort de rappel fourni par l'organe 43 est avantageusement uniformément distribué aux éléments de verrouillage 31. Lorsque le poussoir 33 est en appui contre les éléments de verrouillage 31 dans la direction S24, le poussoir 33 transmet l'effort de rappel de l'organe 43 aux éléments de verrouillage 31, ce qui tend à ramener les éléments de verrouillage 31 en position distale. Dans le présent exemple, le poussoir 33 sert de renvoi d'angle, en appliquant un effort parallèle à l'axe X28 sur l'élément de verrouillage 31, grâce à l'inclinaison de la face 34, qui est perpendiculaire à l'axe X28, alors que l'effort de rappel fourni par l'organe 43 est parallèle à l'axe X5. On réduit donc l'usure des logements 28 et des éléments de verrouillage 31, ainsi que le risque de blocage des éléments 31. La position distale des éléments de verrouillage 31 correspondant à une situation où les éléments de verrouillage 31 peuvent débattre entre la butée 29 et l'épaulement 42, on réduit également le risque de coincement de chaque élément de verrouillage 31 dans la butée annulaire 29.

Un seul organe 43 et un unique poussoir 33 assurant le rappel de tous les éléments de verrouillage 31, le nombre de pièces est réduit et leur montage est facilité. En variante, on peut néanmoins prévoir que le poussoir 33 comprend, au lieu d'une unique bague, une pluralité de doigts individuellement mobiles en translation parallèlement à l'axe X5 par rapport au corps femelle 21, tous les doigts étant répartis autour de l'axe X5 et repoussés par l'organe 43, et chaque doigt étant configuré pour ramener un seul des éléments de verrouillage 31 vers sa position distale.

Dans le cas où un unique organe élastique 43 est prévu, la distribution de l'effort de rappel par le poussoir 33 à tous les éléments de verrouillage 31 permet d'assurer que, si l'un seul des éléments de verrouillage 31 vient à se coincer dans son logement 28, l'effort de rappel est suffisant pour l'en décoincer. Dans le cas de la variante où le poussoir 33 se présente sous la forme de doigts individuels, les autres éléments de verrouillage 31 sont ramenés en position distale même si l'un des doigts se trouve coincé, de sorte que le verrouillage du raccord peut tout de même être assuré.

L'élément femelle 5 comprend une bague de manœuvre 71, destinée à être actionnée par un utilisateur. La bague 71 est avantageusement monobloc. La bague 71 comprend une partie tubulaire externe 74, qui entoure la partie extrémale avant 24 du corps femelle 21, le poussoir de rappel 33 et l'organe élastique 43. Le poussoir 33 et l'organe 43 sont donc radialement interposés entre le corps femelle 21 et la bague de manœuvre 71, en particulier la partie tubulaire 74, en étant entièrement recouverts par la partie 74.

La bague 71 coulisse sur le corps femelle 21 parallèlement à l'axe X5, de sorte à être mobile en translation par rapport au corps femelle 21 le long de l'axe X5. Dans la direction S24 la translation de la bague 71 est bornée à une position avant, montrée sur les figures 1 à 4, par mise en butée de la bague 71 contre le corps femelle 21, en particulier par mise en butée d'un épaulement conique interne 72 de la bague 71, porté par exemple à une extrémité arrière de la partie 74 de la bague 71, contre un épaulement conique externe 73 correspondant du corps femelle 21. Dans la direction S22, la bague 71 peut translater jusqu'à une position reculée par rapport au corps femelle 21, montrée sur la figure 6.

La bague de manœuvre 71 comprend un manchon interne 75, qui est au moins partiellement reçu dans le canal d'insertion 27. Le manchon interne 75 est fixement solidaire de la partie tubulaire 74. De préférence, le manchon interne 75 est attaché à la partie tubulaire externe 74 par l'intermédiaire d'une paroi frontale 76 de la bague 71, de forme annulaire, la paroi frontale 76 étant disposée dans la direction S24 par rapport à la partie extrémale avant 24 du corps femelle 21. Ainsi, la bague de manœuvre 71 présente, à l'extrémité avant de la partie tubulaire externe 74, une partie qui est recourbée vers l'intérieur du corps femelle 21, constituée par le manchon interne 75 et la paroi frontale 76. Le manchon interne 75 forme avantageusement une embouchure de l'élément femelle 5, par l'intermédiaire de laquelle l'élément mâle 4 peut être reçu dans le corps femelle 21. La paroi frontale 76 elle-même s'étend avantageusement dans un plan orthogonal à l'axe X5.

De préférence, le manchon interne 75 forme une paroi interne 77, dite « paroi interne avant », de forme cylindrique coaxiale avec l'axe X5. La paroi 77 s'étend à partir de l'extrémité avant de la bague 71, jusqu'à une paroi proximale 78 du manchon interne 75, constituant une extrémité arrière du manchon interne 75.

Le corps femelle 21 forme une paroi interne 79, dite « paroi interne arrière », qui délimite une partie du canal d'insertion 27. La paroi 79 est disposée dans la direction S24 par rapport à la paroi 80. La paroi interne arrière 79 est de forme cylindrique coaxiale avec l'axe central X5, et s'étend dans la direction S22 à partir du débouché des logements 28 dans le canal 27. La paroi interne arrière 79 est de diamètre D79, qui est avantageusement supérieur à un diamètre D80 de la paroi 80. Un diamètre D77 de la paroi interne avant 77 et avantageusement égale au diamètre D79 de la paroi interne arrière 79. Les parois 77 et 79 sont préférentiellement agencées dans le prolongement l'une de l'autre selon l'axe X5, la paroi 79 étant dans la direction S22 par rapport à la paroi 77. En position reculée de la bague 71, les parois 77 et 79 ménagent avantageusement un faible jeu axial entre elles, comme montré sur la figure 6, alors que, en position avancée de la bague 71, les parois 77 et 79 sont axialement plus éloignées, comme montré sur les figures 1 à 4. Comme montré sur les figures 1 et 4, en position avancée de la bague de manœuvre 71 et en position distale des éléments de verrouillage 31, les éléments de verrouillage 31 font radialement saillie dans le canal 25 en dépassant radialement vers l'intérieur des parois 77 et 79, et en étant axialement agencées entre les parois 77 et 79.

La paroi proximale 78 est avantageusement inclinée par rapport à l'axe X5, d'un angle A78, qui est compris entre 20 degrés et 70 degrés, de préférence 45 degrés. La paroi proximale 78 est donc conique. On prévoit que la paroi proximale 78 est perpendiculaire aux axes X28 et parallèle à la face avant inclinée 34 du poussoir 33. La bague de manœuvre 71 est configurée pour entraîner les éléments de verrouillage 31 de leur position distale jusqu'à leur position proximale par mise en appui de la paroi proximale 78 du manchon interne 75, lorsque la bague de manœuvre 71 est déplacée de sa position avancée à sa position reculée. La paroi proximale 78 sert ainsi de renvoi d'angle pour convertir un effort axial, orienté selon la direction S22 et appliqué sur la bague 71 par un utilisateur, en un effort d'entrainement de chaque élément de verrouillage 31 vers sa position proximale, parallèlement à son axe X28 respectif. L'inclinaison de la paroi proximale 78 évite ainsi le coincement et l'usure des éléments 31 le long des logements 28 lorsque la bague 71 est actionnée.

Comme montré sur la figure 6, par l'intermédiaire de la paroi proximale 78 du manchon interne 75, la bague de manœuvre 71 interdit aux éléments de verrouillage d'adopter leur position distale lorsque la bague de manœuvre 71 est en position reculée. Ici, la position reculée de la bague 71 maintient les éléments 31 en position proximale. Comme montré sur les figures 1 à 4, lorsque les éléments de verrouillage 31 sont en position distale et que la bague de manœuvre 71 est en position avancée, les éléments de verrouillage 31 sont avantageusement à distance de la paroi proximale 78. Plus généralement, la mise en position avancée de la bague de manœuvre 71 autorise les éléments de verrouillage à adopter leur position distale, puisque la paroi proximale 78 est dans la direction S24 par rapport à cette position distale.

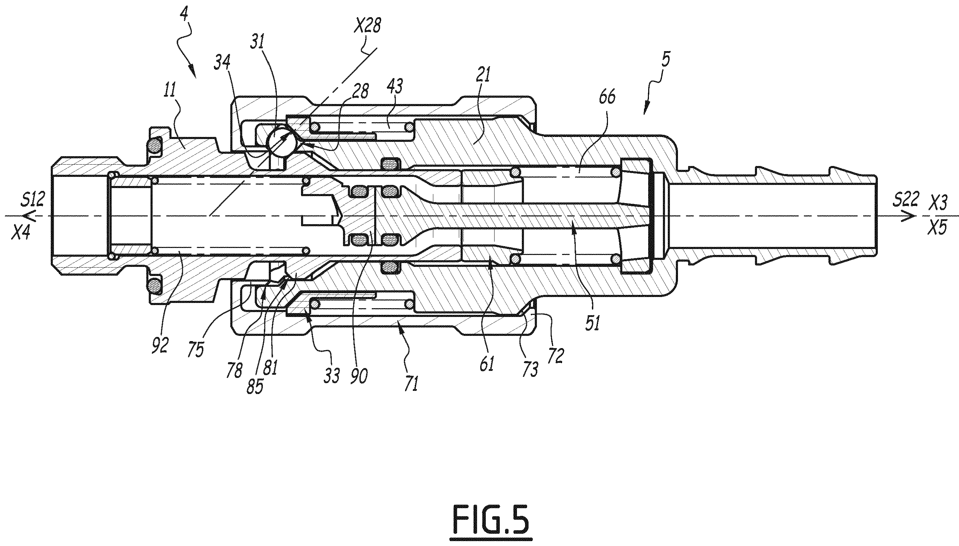

Comme montré sur les figures 1 à 4, la bague de manœuvre 71, en particulier la partie tubulaire externe 74, comporte un épaulement interne arrière 89, orienté dans la direction S22, qui, en position avancée de la bague de manœuvre 71, est à distance d'une face extrémale avant 39 du poussoir 33, la face 39 étant formée autour de la face 34 et étant tournée dans la direction S24. Comme montré sur les figures 5 et 6, lorsque l'on déplace la bague 71 de la position avancée à la position reculée, la bague 71 vient en appui contre le poussoir 33, en particulier par mise en appui axial de l'épaulement 89 contre la face 39. Dans son déplacement vers la position reculée, la bague 71 entraîne le poussoir 33 vers sa position arrière, à l'encontre de l'effort de rappel imparti par l'organe 43. Dans cette situation, les éléments de verrouillage 31 sont déchargés de l'effort de rappel imparti par l'organe 43, cet effort étant transmis par le poussoir 33 à la bague de manœuvre 71. En d'autres termes, lorsque l'on déplace la bague de manœuvre 71 vers la position reculée, aucun effort de rappel ne s'applique sur les éléments de verrouillage 31, puisque la bague de manœuvre 71 entraîne le poussoir de rappel 33 vers la position arrière, à l'écart des éléments de verrouillage 31.

Réciproquement, le poussoir 33 tend à ramener la bague 71 vers sa position avancée, notamment lorsque la bague 71 est en position reculée, sous l'action de l'effort de rappel imparti par l'organe 43, par appui dans la direction S24 du poussoir 33 contre la bague 71, via la face 39 et l'épaulement 89. L'organe élastique 43 assurant à lui seul, tour à tour, une fonction de rappel des éléments de verrouillage 31 et une fonction de rappel de la bague de manœuvre 71, le nombre de pièces de l'élément femelle 5 est particulièrement réduit et le montage facilité, puisqu'il n'est pas nécessaire de prévoir deux ressorts distincts pour assurer ces deux fonctions de rappel.

Autrement exprimé, dans cette manœuvre, chaque élément de verrouillage 31 ne peut à la fois faire contact avec le poussoir de rappel 33 et la bague de manœuvre 71, de telle sorte que, les éléments de verrouillage 31 étant libres avec un jeu de débattement le long de l'axe X28 dans leur logement, aussi faible soit-il, le poussoir de rappel 33 ne peut exercer d'effort de rappel sur les éléments de verrouillage 31. Pour toute configuration de l'élément femelle 5, et en particulier lorsque la bague de manœuvre 71 est en appui dans la direction S22 contre le poussoir 33, la paroi proximale 78 du manchon interne 75 et à une distance suffisante de la face avant inclinée 34 du poussoir 33, pour autoriser un débattement des éléments de verrouillage 31, le long de leur axe X28 respectif, entre la paroi proximale 78 et la face avant inclinée 34. Autrement dit, lorsque la bague de manœuvre 71 est déplacée vers la position reculée, la cotation de la bague de manœuvre 71, du poussoir de rappel 33, en appui contre la bague de manœuvre 71, et la dimension de l'élément de verrouillage 31 concerné sont telles, qu'un débattement libre de l'élément de verrouillage 31 dans son logement 28 est praticable. En d'autres termes, dans cette situation, chaque élément 31 ne peut être en contact qu'avec une seule surface parmi la paroi 78 et la face 34, en pouvant librement se déplacer jusqu'à l'autre de ces deux surfaces. La face avant inclinée 34 ou la paroi proximale 78 est donc tenue à distance des éléments de verrouillage 31, pour autoriser un déplacement des éléments de verrouillage 31 entre la face inclinée 34 et la paroi proximale 78 lorsque la bague de manœuvre 71 est déplacée de sa position avancée vers sa position reculée. C'est ainsi que le risque de coincement des éléments 31 est réduit au déverrouillage du raccord, puisque les éléments 31 ne sont pas compressés entre la bague 71 et le poussoir 33, et ne subissent donc pas l'effort de rappel de l'organe élastique 43. Comme montré sur la figure 6, on prévoit que, au moins localement au niveau de chaque élément de verrouillage 31, une distance minimale d34 entre la paroi proximale 78 et la face avant inclinée 34, mesurée selon l'axe X28, est toujours supérieure à la taille de l'élément de verrouillage 31 concerné mesurée selon l'axe X28, ici le diamètre de la bille formant l'élément de verrouillage 31. Autrement dit, les éléments de verrouillage 31 sont aptes à être en contact avec la bague de manœuvre 71 et sont tenus à l'écart du poussoir de rappel 33 lorsque la bague de manœuvre 71 est déplacée de sa position avancée vers sa position reculée. Cette condition reste vérifiée lorsque le poussoir 33 est en butée contre l'épaulement 89 de la bague 71.

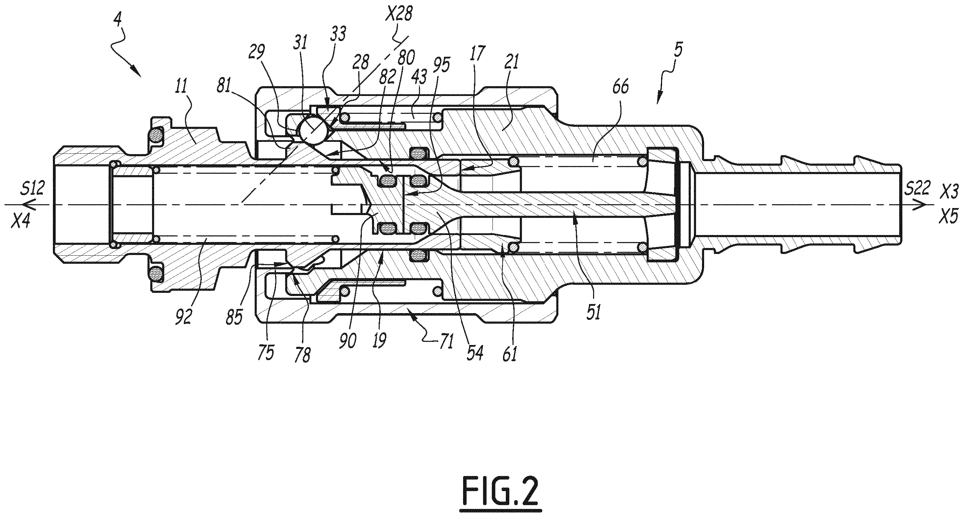

Lors de l'accouplement de l'élément mâle 4 avec l'élément femelle 5, le corps mâle 11 est reçue dans le canal d'insertion 27 du corps femelle 21, en étant introduit au travers du manchon interne 75 de la bague de manœuvre 71, comme montré sur les figures 2 à 4, illustrant les étapes successives de l'accouplement du raccord.

Le corps mâle 11, en particulier sa partie extrémale avant 14, forme une face avant 17, s'étendant dans un plan orthogonal à l'axe X4. La face 17 est destinée à venir en appui contre la face 62 du tiroir d'obturation 61 lors de l'insertion de l'élément mâle 4 dans l'élément femelle 5, pour repousser le tiroir d'obturation 61 dans la direction S22 par rapport au corps femelle 21 contre l'action de l'organe 66, et ainsi ouvrir le passage pour le fluide dans le corps femelle 21.

La face 17 entoure avantageusement le débouché du conduit interne 15 dans la direction S14, le conduit interne 15 présentant, à partir de la face 17, une paroi cylindrique interne 18 qui s'étend dans la direction S12. La paroi 18 présente un diamètre D18, supérieur ou égal à un diamètre D54 de la tête de piston 54, de sorte que la paroi 18 est enfilée autour de la tête de piston 54 lors de l'insertion de l'élément mâle 4 dans l'élément femelle 5, comme monté sur la figures 2.

Le corps mâle 11 présente une paroi radiale externe 19, qui s'étend à partir de la face 17 dans la direction S12. La paroi 19 est avantageusement de forme cylindrique et présente un diamètre D19, qui est avantageusement inférieur ou égal au diamètre D80, de sorte que, lors de l'insertion de l'élément mâle 4 dans l'élément femelle 5, la paroi 19 est reçue à coulissement coaxial dans la paroi 80, comme montré sur les figures 2 à 6, le joint 57 assurant alors avantageusement l'étanchéité entre ces parois 19 et 80.

De préférence, le corps mâle 11 comprend une collerette 81, centrée sur l'axe X4 et est formée en saillie vers l'extérieur, à une extrémité arrière de la paroi 19, opposée à la face 17.

A l'avant, c'est-à-dire dans la direction S14, la collerette 81 forme une surface 82 inclinée, qui peut être qualifiée de rampe. La surface 82 débute avantageusement à partir de l'extrémité arrière de la paroi 19, jusqu'à une paroi cylindrique de sommet 83 de la collerette 81. La surface 82 s'étend en augmentation de diamètre dans la direction S12. La surface 82 est préférentiellement de forme conique convergente vers l'avant du corps mâle, c'est à dire dans la direction S14. La surface 82 présente un angle A82 avec l'axe X4, qui est compris entre 10 degrés et 50 degrés, de préférence égal à 35 degrés. La surface 82 est conçue pour repousser les éléments de verrouillage 31 dans leur position proximale lorsque l'élément mâle est reçu dans le canal 27. Lors de l'insertion de l'élément mâle 4 dans l'élément femelle 5, la surface 82 entre en contact avec les éléments de verrouillage 31, qui sont en position distale, et repousse les éléments de verrouillage 31 vers leur position proximale, par glissement ou roulement des éléments de verrouillage sur la rampe 82, comme montré successivement sur les figures 2 et 3.

La paroi cylindrique de sommet 83 est avantageusement coaxiale avec l'axe X4. La paroi 83 présente un diamètre D83, qui est préférentiellement inférieur ou égal aux diamètres D77 et D79, tout en étant suffisamment élevé pour interdire le passage de la collerette 81 et le retrait de l'élément mâle 4, alors que le raccord est en configuration accouplée. Lors de l'insertion de l'élément mâle 4 dans l'élément femelle 5, comme montré sur la figure 2, la paroi 83 coulisse d'abord le long de la paroi 77 du manchon interne 75. Ensuite, la paroi 83 atteint les éléments de verrouillage 31, qui ont préalablement été repoussés en position proximale par la paroi 82. Lesdits éléments de verrouillage 31 sont alors temporairement maintenus en position proximale par la paroi 83. Ensuite, comme montré sur les figures 3 et 4, la paroi 83 coulisse le long de la paroi 79 du canal 27, où elle est logée en configuration accouplée de l'accouplement, comme montré sur la figure 4. En configuration accouplée de l'accouplement, la paroi 82 vient en regard d'une paroi inclinée 84 du corps femelle 21, reliant les parois 79 et 80.

A l'arrière, c'est-à-dire dans la direction S12, la collerette 81 forme une surface 85 inclinée, qui peut être qualifiée de chanfrein. La surface 85 débute avantageusement à partir de l'extrémité arrière de la paroi 83, jusqu'à une extrémité arrière de la collerette 81. La surface 85 s'étend en réduction de diamètre dans la direction S12. La surface 85 est préférentiellement conique, en présentant un angle A85 avec l'axe X4, qui est compris entre 20 degrés et 70 degrés, de préférence égal à 45 degrés. Comme montré sur la figure 4, lors de l'insertion de l'élément mâle 4 dans l'élément femelle 5, une fois que la surface 85 a franchi les éléments de verrouillage 31, la paroi 85 arrive axialement à la hauteur des éléments de verrouillage 31 et les autorise ainsi à revenir en position distale sous l'action du poussoir 33, mû par l'effort de rappel exercé par l'organe 43. Dans cette situation, si la bague de manœuvre 61 est dans sa position avancée, le manchon interne 75 ne s'oppose pas à ce que les éléments de verrouillage 31 soit mis en position distale. Comme montré sur la figure 4, une fois que les éléments de verrouillage 31 sont en position distale et que la collerette 81 a franchi les éléments de verrouillage 31, les éléments de verrouillage 31 s'opposent au retrait du corps mâle 11 hors du canal 27, c'est-à-dire de l'élément mâle 4 hors de l'élément femelle 5, par coopération mécanique avec la surface 85. Le raccord est alors en configuration accouplée.

L'élément mâle 4 comprend en outre un clapet 90, qui est mobile en translation selon l'axe X4 dans le conduit interne 15 du corps mâle 11, entre d'une part une position avant, montrée sur la figure 1, dans laquelle le clapet 90 obture le conduit interne 15, en obturant la paroi 18, par exemple grâce à un joint d'étanchéité périphérique 91 porté par le clapet 90 et interposé entre la paroi 18 et le clapet 90, et d'autre part une position arrière, dans la direction S12 par rapport à la position avant, montrée sur la figure 4, dans laquelle le clapet 90 autorise le passage du fluide au travers du conduit 15. L'élément mâle 4 comprend avantageusement un organe élastique 92, disposé dans le conduit interne 15, qui exerce un effort de rappel du clapet 90 vers sa position avant, en prenant par exemple appui sur une bague interne 93 de l'élément mâle 4, fixée au corps mâle 11 dans le conduit 15 en partie arrière 12. Comme montré sur les figures 2 à 4, lors de l'insertion de l'élément mâle 4 dans l'élément femelle 5, une face avant 95 du clapet 90 vient en appui contre la face avant 56 du piston 51, de sorte que le piston 51 entraîne le clapet 90 vers sa position arrière et ouvre ainsi le passage pour le fluide dans le corps mâle 11.

Durant l'accouplement, l'ouverture du tiroir 61 et du clapet 90 est avantageusement simultanée pour le passage du fluide.

En configuration accouplée du raccord, la pression du fluide, ainsi que les efforts impartis par les organes élastiques 66 et 92 tendent à repousser le corps mâle 11 hors du canal d'insertion 27 de l'élément femelle 5, c'est-à-dire à déplacer le corps mâle 11 dans la direction S12 par rapport au corps femelle 21. Par conséquent, le corps mâle 11 est en butée dans la direction S12 contre les éléments de verrouillage 31. Chaque élément de verrouillage 31 est donc interposé en compression entre la surface 85 et la paroi de son logement respectif 28, tout en étant maintenue contre la butée annulaire 29 dudit logement 28 par le poussoir de rappel 33, sous l'effet de l'effort de rappel imparti par l'organe 43.

On prévoit avantageusement que l'angle A85 de la surface 85 du corps mâle 11, par rapport à l'axe X4, et que l'angle A78 de la paroi proximale 78 du manchon interne 75 de l'élément femelle 5, par rapport à l'axe X5, sont égaux en étant de préférence égal à 45 degrés. On prévoit avantageusement que l'angle A85 est égal à l'angle A28, ces angles étant de préférence égaux à 45 degrés. Ainsi, les efforts de répulsion de l'élément mâle 4 susmentionnés, ou même une tentative de retrait de l'élément mâle 4 hors de l'élément femelle 5, alors que le raccord est en configuration accouplée, ne produit pas de sollicitation supplémentaire de l'organe élastique 43, mais met davantage en appui les éléments de verrouillage 31 contre les logements 28. L'appui de chaque élément de verrouillage 31 s'effectue selon un axe d'effort perpendiculaires à la surface 85 et au logement 28 concerné, ce qui bénéficie au coincement de chaque élément de verrouillage 31 sollicité, ainsi qu'à la sécurisation du verrouillage du raccord en configuration accouplée. Même si l'organe élastique 43 est dégradé, l'accouplement est donc maintenu. En outre, l'organe élastique 43 est moins susceptible de s'user si le raccord est mécaniquement sollicité en configuration accouplée.

En configuration accouplée du raccord, lorsque l'on souhaite passer en configuration déverrouillée, le déplacement des éléments de verrouillage 31 vers la position proximale est opéré par la bague de manœuvre 71 plutôt que par un mouvement de retrait de l'élément mâle 4 hors de l'élément femelle 5, comme cela a pu se faire dans l'art antérieur. Comme montré sur la figure 5, un opérateur déplace la bague de manœuvre 71 vers la position reculée, de sorte que le manchon interne 75, en particulier la paroi proximale 78, entre en contact avec les éléments de verrouillage 31 pour les entraîner vers leur position proximale. Lorsque la position proximale est atteinte comme montré sur la figure 6, le manchon interne 75, en particulier la paroi proximale 78, évite que les éléments de verrouillage 31 ne retournent à leur position distale, de sorte que le retrait de l'élément mâle 4 hors de l'élément femelle 5 s'effectue sans entraînement des éléments de verrouillage 31 par l'élément mâle 4, en particulier sa collerette 81. Lorsque la bague de manœuvre 71 est en position reculée comme montré sur la figure 6, les parois 77 et 79 sont quasiment contigües de sorte à former une piste de coulissement de la collerette 81, en particulier de sa paroi 83, facilitant le retrait de l'élément mâle 4. Le déplacement des éléments de verrouillage 31 pour le déverrouillage dépendant de la course de la bague de manœuvre 71 et non pas de la course de l'élément mâle 4, l'élément femelle 5 peut être conçu de façon à obtenir que la course de l'élément mâle 4 par rapport au corps femelle 21 pour le verrouillage et le déverrouillage est particulièrement faible. La compacité axiale de l'élément femelle 5 s'en trouve avantageusement améliorée. En outre, puisque la bague de manœuvre 71 assure le déplacement des éléments de verrouillage 31 vers leur position proximale sans intervention de l'élément mâle 4, il est plus aisé de concevoir que l'élément femelle 5 est adapté à d'autres éléments mâles, présentant des profils différents de celui montré aux figures ou des comportant des dispersions dimensionnelles. L'élément femelle 5 s'avère donc particulièrement polyvalent.

Lorsque la bague de manœuvre 71 est déplacée vers sa position reculée par l'opérateur durant le déverrouillage, comme montré sur la figure 5, l'épaulement 89 de la bague 71 vient en appui contre la face 39 du poussoir 33 avant que la paroi proximale 78 ne puisse venir en appui contre les éléments de verrouillage 31, de sorte que, lorsque la paroi proximale 78 vient en appui contre les éléments de verrouillage 31, l'appui du poussoir 33 contre les éléments de verrouillage a nécessairement été rompu, l'effort de rappel fourni par l'organe 43 étant alors transmis à la bague de manœuvre directement par le poussoir 33.

Le mode de réalisation des figures 7 à 10 concerne un raccord qui est identique au raccord des figures 1 à 6, hormis pour les différences et particularités décrites ci-dessous. Des expressions identiques et des signes de référence identiques sont utilisés pour toutes les caractéristiques communes aux deux modes de réalisation.

Dans le raccord des figures 7 à 10, l'élément mâle 4 est strictement identique à l'élément mâle des figures 1 à 6.

Concernant l'élément femelle 5 des figures 7 à 10, au lieu de se présenter sous la forme d'une bille, chaque élément de verrouillage 31 se présente sous la forme d'un rouleau cylindrique, qui est coaxial à l'axe de déplacement X28. Dans le mode de réalisation des figures 7 à 10, on prévoit seulement trois éléments de verrouillage 31, logés dans trois logements 28 respectifs du corps femelle 21.

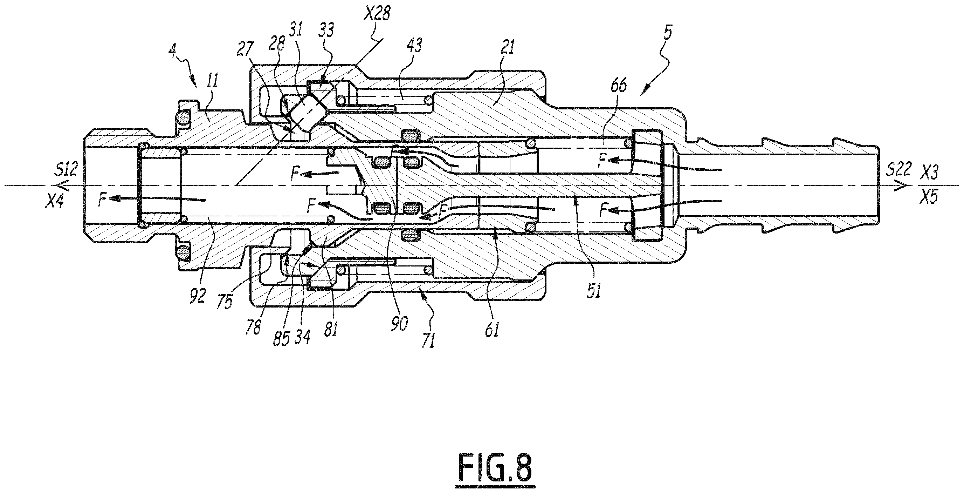

Dans le raccord des figures 7 à 10, chaque logement 28 présente une forme cylindrique autour coaxiale à l'axe X28 sur toute sa longueur, à diamètre constant. En particulier, les logements 28 ne comprennent pas les butées annulaires 29 présentes pour le raccord des figures 1 à 6, ou de fond de perçage. Chaque logement 28 est donc plus facile à fabriquer. Dans le mode de réalisation des figures 7 à 10, la butée des éléments de verrouillage 31 dans la direction S24, en position distale, est assurée par la paroi proximale 78 du manchon interne 75, comme montré sur les figures 7 et 8, mais n'est pas assurée par les logements 28 eux-mêmes, qui ne limitent pas le déplacement des éléments 31 dans cette direction. Lorsque la bague de manœuvre 71 est en position avancée et que les éléments de verrouillage 31 sont en positon distale, les éléments de verrouillage 31 peuvent débattre le long leur axe X28 respectif entre la paroi proximale 78 et la face avant inclinée 34 du poussoir 33, qui sont est espacés à une distance supérieure ou égale à la distance minimale d34, mesurée le long de l'axe X28, laquelle est supérieure à la longueur respective des éléments de verrouillage 31, mesurée le long de leur axe X28 respectif.

En configuration accouplée du raccord, comme montrée sur la figure 8, la paroi proximale 78 et la face avant inclinée 34 étant toujours à une distance supérieure ou égale à la distance minimale d34, un déplacement des éléments de verrouillage 34 par rapport au corps femelle 21 le long de leur axe X28 est théoriquement possible. Cependant, les éléments de verrouillage 31 sont interposés, le long d'un axe perpendiculaire à leur axe X28 respectif, entre la paroi de leur logement 28 respectif et la surface 85 formée sur la collerette 81 du corps mâle 11, de sorte que chaque élément de verrouillage 31, par adhérence, est immobilisé dans son logement 28 le long de l'axe X28, à une position indéterminée entre la paroi proximale 78 et la face avant inclinée 34, sous l'effet de l'effort de répulsion causé par la pression du fluide ou des organes élastiques 66 et 92.

En configuration accouplée, le fait de prévoir que les éléments de verrouillage 31 sont des rouleaux plutôt que des billes permet que les éléments de verrouillage 31 peuvent encaisser des efforts plus importants, notamment par une meilleure résistance des rouleaux au matage par répartition des contraintes sur un appui linéique plutôt que sur un appui ponctuel propre aux billes. On peut ainsi utiliser le raccord même si la pression de fluide circulant dans le raccord est particulièrement élevée et/ou même si le raccord est mécaniquement très sollicité depuis l'extérieur. Alternativement, à résistance mécanique égale, on peut prévoir que le nombre d'éléments de verrouillage 31 est inférieur, si l'on prévoit des rouleaux plutôt que des billes. Cela facilite la fabrication, en particulier pour la réalisation des logements débouchants 28.

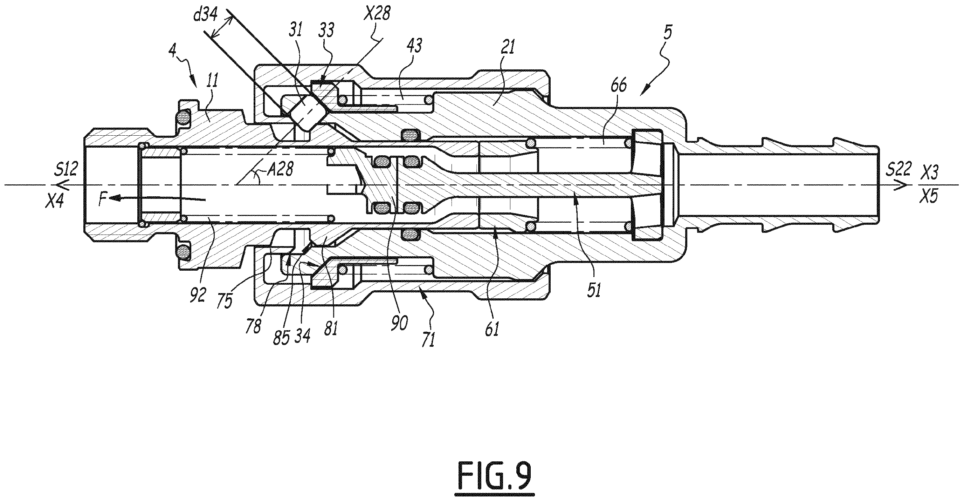

La figure 9 correspond à une situation similaire à la figure 5, où la bague de manœuvre 71, déplacée vers sa position reculée, vient en appui dans la direction S22 contre les éléments 31, après avoir désamorcé l'appui que le poussoir 33 exerce contre les éléments 31. Dans cette situation, l'effort de rappel imparti par l'organe élastique 43 ne s'applique plus sur les éléments 31, mais sur la bague 71.

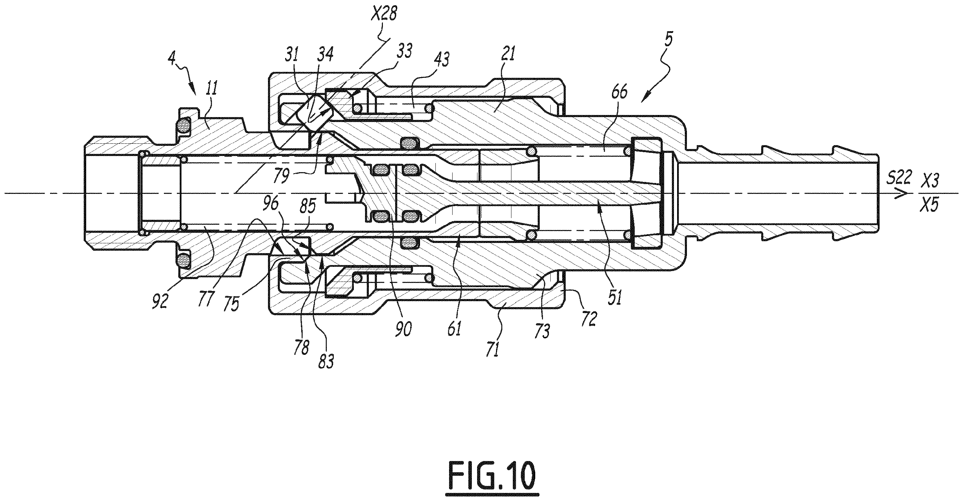

A la différence du mode de réalisation des figures 1 à 6, dans le mode de réalisation des figures 7 à 10, en position reculée, la bague de manœuvre 71 arrive en butée contre le corps femelle 21 dans la direction S22, en particulier par mise en butée axiale de la paroi proximale 78 de l'épaulement interne 75 contre une paroi distale 96 du corps femelle 21, qui délimite en partie le canal d'insertion 21, axialement au même niveau que le débouché des logements 28 dans le canal d'insertion 21. Cette mise en butée de la bague de manœuvre 71 est montrée sur la figure 10.

En variante, le corps mâle 11 présente un profil extérieur différent de celui montré aux figures. Par exemple, les surfaces 82 et 85 ne sont pas formées sur une collerette et/ou s'étendent seulement sur une partie de la circonférence.

En variante, le corps 11 et/ou le corps 21 et/ou la bague 74 ne sont pas monoblocs. En particulier, le corps 21 peut être réalisé en deux ou trois parties le long de l'axe X5, notamment pour faciliter le montage des pièces reçues dans le conduit interne 25.

En variante, le nombre d'éléments de verrouillage 31, et de logements 28 correspondants, est différent de trois ou de six, en étant préférentiellement supérieur ou égal à trois.

Toute caractéristique décrite ci-dessus pour un mode de réalisation ou une variante s'applique aux autres modes de réalisation et variantes décrites ci-dessus, pour autant que techniquement possible et selon les revendications sous-citées.

## Revendications

1. Elément femelle (5), pour un raccord fluidique conçu pour la jonction de canalisations (1, 2) de fluide sous pression, l'élément femelle (5) étant configuré pour être accouplé avec un élément mâle (4) complémentaire, appartenant au raccord fluidique, l'élément femelle (5) comprenant :
- un corps femelle (21), définissant un canal d'insertion (27) de l'élément mâle (4), le canal d'insertion (27) définissant un axe central (X5) du corps femelle (21) ;
- des éléments de verrouillage (31), qui sont reçus dans des logements (28) respectifs ménagés dans l'épaisseur du corps femelle (21), chaque logement (28) étant incliné par rapport à l'axe central (X5) et débouchant dans le canal d'insertion (27), chaque élément de verrouillage (31) étant mobile par rapport au corps femelle (21), entre une position distale, dans laquelle ledit élément de verrouillage (31) dépasse radialement dans le canal d'insertion (27), et une position proximale, dans laquelle ledit élément de verrouillage (31) est en retrait du canal d'insertion (27) ; et
- une bague de manœuvre (71), qui entoure le corps femelle (21) et qui est mobile en translation par rapport au corps femelle (21) le long de l'axe central (X5), entre une position avancée et une position reculée, la bague de manœuvre (71) comprenant un manchon interne (75) qui est au moins partiellement reçu dans le canal d'insertion (27), le manchon interne (75) étant configuré pour :
• entraîner les éléments de verrouillage (31) jusqu'à leur position proximale, lorsque la bague de manœuvre (71) est déplacée de sa position avancée vers sa position reculée,
• interdire aux éléments de verrouillage (31) d'adopter leur position distale lorsque la bague de manœuvre (71) est en position reculée, et
• autoriser les éléments de verrouillage (31) à adopter leur position distale lorsque la bague de manœuvre (71) est en position avancée ;
**caractérisé en ce que** :
- l'élément femelle (5) comprend en outre :
• un poussoir de rappel (33), qui est intercalé radialement entre la bague de manœuvre (71) et le corps femelle (21), qui est mobile par rapport au corps femelle (21) et qui est destiné à ramener les éléments de verrouillage (31) vers leur position distale, le poussoir de rappel (33) étant mobile entre une position avant, dans laquelle les éléments de verrouillage (31) sont dans leur position distale, et une position arrière, dans laquelle le poussoir de rappel (33) laisse les éléments de verrouillage (31) librement mobiles entre leur position distale et leur position proximale, et
• un organe élastique (43), qui exerce un effort de rappel tendant à ramener le poussoir de rappel (33) vers sa position avant ; et
- la bague de manœuvre (71) est configurée pour entraîner le poussoir de rappel (33) vers sa position arrière, de telle sorte que le poussoir de rappel (33) n'exerce pas d'effort de rappel sur les éléments de verrouillage (31) lorsque la bague de manœuvre (71) est déplacée de sa position avancée vers sa position reculée.

2. Elément femelle (5) selon la revendication 1 dans lequel la bague de manœuvre (71) est configurée pour entraîner le poussoir de rappel vers sa position arrière, à l'écart des éléments de verrouillage (31), lorsque la bague de manœuvre (71) est déplacée de sa position avancée vers sa position reculée.

3. Elément femelle (5) selon l'une des revendications 1 ou 2, dans lequel le poussoir de rappel (33) est une bague de rappel mobile en translation par rapport au corps femelle (21), le long de l'axe central (X5), et destinée à ramener les éléments de verrouillage (31) vers leur position distale sous l'action de l'effort de rappel lorsque la bague de rappel est en appui contre les éléments de verrouillage (31).

4. Elément femelle (5) selon l'une quelconque des revendications précédentes, dans lequel le corps femelle (21) constitue une butée du poussoir de rappel (33) dans sa position avant.

5. Elément femelle (5) selon l'une quelconque des revendications précédentes, dans lequel :
- le manchon interne (75) comprend une paroi proximale (78), par l'intermédiaire de laquelle le manchon interne (75) entraîne les éléments de verrouillage (31) de leur position distale jusqu'à leur position proximale, lorsque la bague de manœuvre (71) est déplacée de sa position avancée à sa position reculée ;
- le poussoir de rappel (33) comprend une face avant inclinée (34), par l'intermédiaire de laquelle le poussoir de rappel (33) est apte à venir en butée contre les éléments de verrouillage (31) ; et
- la face avant inclinée (34) ou la paroi proximale (78) est tenue à distance des éléments de verrouillage (31), de sorte à autoriser un déplacement des éléments de verrouillage (31) entre la face avant inclinée (34) et la paroi proximale (78) lorsque la bague de manœuvre (71) est déplacée de sa position avancée vers sa position reculée
et dans lequel la paroi proximale (78) est préférentiellement inclinée par rapport à l'axe central (X5), d'un angle compris entre 20 degrés et 70 degrés, en particulier égal à 45 degrés.

6. Elément femelle (5) selon l'une quelconque des revendications précédentes, dans lequel chaque élément de verrouillage (31) est mobile entre sa position proximale et sa position distale selon un axe de déplacement (X28) respectif, qui est incliné par rapport à l'axe central (X5), d'un angle (A28) compris entre 20 degrés et 70 degrés, de préférence égal à 45 degrés.

7. Elément femelle (5) selon l'une quelconque des revendications précédentes, dans lequel, les éléments de verrouillage (31) prennent appui sur le manchon interne (75), lorsque les éléments de verrouillage (31) sont en position distale.

8. Elément femelle (5) selon l'une quelconque des revendications précédentes, dans lequel, chaque élément de verrouillage (31) prend appui sur une butée annulaire (29) respective du corps femelle (21), lorsque ledit élément de verrouillage (31) est en position distale.

9. Elément femelle (5) selon l'une quelconque des revendications précédentes, dans lequel le poussoir de rappel (33) est configuré pour venir en appui contre la bague de manœuvre (71), le poussoir de rappel (33) tendant à ramener la bague de manœuvre (71) vers la position avancée sous l'action de l'effort de rappel, lorsque le poussoir de rappel (33) est en appui contre la bague de manœuvre (71).

10. Elément femelle (5) selon l'une quelconque des revendications précédentes, dans lequel :
- le manchon interne (75) forme une paroi interne avant (77), de forme cylindrique centrée sur l'axe central (X5) ;
- le corps femelle (21) forme une paroi interne arrière (79), délimitant une partie du canal d'insertion (27), la paroi interne arrière (79) étant de forme cylindrique centrée sur l'axe central (X5) ; et
- la paroi interne avant (77) et la paroi interne arrière (79) sont de diamètre égal et sont agencées dans le prolongement l'une de l'autre.

11. Elément femelle (5) selon l'une quelconque des revendications précédentes, dans lequel chaque élément de verrouillage (31) est formé :
- par une bille respective, ou
- par un rouleau cylindrique respectif.

12. Elément femelle (5) selon l'une quelconque des revendications précédentes, dans lequel l'élément femelle (5) comprend :
- un piston central (51), disposé à l'intérieur du canal d'insertion (27) en étant fixe par rapport au corps femelle (21), le piston central (51) présentant une première face avant (56) ; et
- un tiroir d'obturation (61), radialement intercalé entre le canal d'insertion (27) et le piston central (51), en étant mobile par rapport au corps femelle (21) entre une position avancée, dans laquelle le tiroir d'obturation (61) obture fluidiquement le canal d'insertion (27), et une position reculée, dans laquelle le tiroir d'obturation (61) libère fluidiquement le canal d'insertion (27), le tiroir d'obturation (61) présentant une deuxième face avant (62), la première face avant (56) et la deuxième face avant (62) s'étendant dans un même plan perpendiculaire à l'axe central (X5) lorsque le tiroir d'obturation (61) est dans la position avancée.

13. Raccord fluidique, conçu pour la jonction de canalisations (1, 2) de fluide sous pression, le raccord fluidique comprenant un élément femelle (5) selon l'une quelconque des revendications précédentes et un élément mâle (4) complémentaire, avec lequel l'élément femelle (5) est configuré pour être accouplé, l'élément mâle (4) comprenant un corps mâle (11) qui est apte à être reçu dans le canal d'insertion (27) du corps femelle (21) au travers du manchon interne (75), à pousser les éléments de verrouillage (31) dans leur position proximale lorsque le corps mâle est reçu dans le canal d'insertion (27), et à coopérer avec les éléments de verrouillage (31) lorsque les éléments de verrouillage (31) sont en position distale, pour empêcher le retrait axial du corps mâle (11) hors du canal d'insertion (27).

14. Raccord fluidique selon la revendication 13, dans lequel le corps mâle (11) comprend :
- une collerette (81) ;
- une première surface (82), formée à l'avant de la collerette (81) et étant apte à repousser les éléments de verrouillage (31) dans leur position proximale lorsque l'élément mâle (4) est reçu dans le canal d'insertion (27) du corps femelle (21), la première surface (82) présentant de préférence une forme conique convergeant vers l'avant de l'élément mâle (4).
- une deuxième surface (85), formée à l'arrière de la collerette (81) et étant apte à coopérer avec les éléments de verrouillage (31), alors que les éléments de verrouillage (31) sont en position distale, pour empêcher le retrait axial du corps mâle (11) hors du canal d'insertion (27), la deuxième surface (85) étant préférentiellement inclinée selon un angle (A85) compris entre 20 degrés et 70 degrés, par exemple égal à 45 degrés, par rapport à un axe central (X4) de l'élément mâle (4) défini le long du corps mâle, l'axe central (X4) de l'élément mâle (4) et l'axe central (X5) de l'élément femelle (5) étant coaxiaux lorsque le corps mâle (11) est reçu dans le canal d'insertion (27) du corps femelle (21).

15. Raccord fluidique selon la revendication 14, prise en combinaison avec la revendication 5, dans lequel la deuxième surface (85) du corps mâle (11) et la paroi proximale (78) du manchon interne (75) de l'élément femelle (5) sont inclinés par rapport à l'axe central (X4, X5) de leur élément mâle (4) ou femelle (5) respectif, d'un angle (A85, A78) égal, cet angle (A85, A78) étant de préférence égal à 45 degrés.

## Patentansprüche

1. Buchsenelement (5) für eine Fluidkupplung, die zum Verbinden von unter Druck stehenden Fluidleitungen (1, 2) bestimmt ist, wobei das Buchsenelement (5) konfiguriert ist, um mit einem komplementären Steckerelement (4) gekoppelt zu werden, das zu der Fluidkupplung gehört, das Buchsenelement (5) umfassend:
- einen Buchsenkörper (21), der einen Einführkanal (27) des Steckerelements (4) definiert, wobei der Einführkanal (27) eine mittlere Achse (X5) des Buchsenkörpers (21) definiert;
- Verriegelungselemente (31), die in entsprechenden Aufnahmen (28) aufgenommen sind, die in der Stärke des Buchsenkörpers (21) ausgebildet sind, wobei jede Aufnahme (28) in Bezug auf die mittlere Achse (X5) geneigt ist und in den Einführkanal (27) mündet, wobei jedes Verriegelungselement (31) in Bezug auf den Buchsenkörper (21) zwischen einer distalen Position, in der das Verriegelungselement (31) radial in den Einführkanal (27) hervorsteht, und einer proximalen Position, in der das Verriegelungselement (31) aus dem Einführkanal (27) zurückgezogen ist, beweglich ist; und
- einen Betätigungsring (71), der den Buchsenkörper (21) umgibt und der in Bezug auf den Buchsenkörper (21) entlang der mittleren Achse (X5) zwischen einer vorgeschobenen Position und einer zurückgezogenen Position verschiebbar beweglich ist, der Betätigungsring (71) umfassend eine Innenhülse (75), die mindestens teilweise in dem Einführkanal (27) aufgenommen ist, wobei die Innenhülse (75) zu Folgendem konfiguriert ist:
• Antreiben der Verriegelungselemente (31) in ihre proximale Position, wenn der Betätigungsring (71) von seiner vorgeschobenen Position in seine zurückgezogene Position verstellt wird,
• Verhindern, dass die Verriegelungselemente (31) ihre distale Position einnehmen, wenn der Betätigungsring (71) in der zurückgezogenen Position ist, und
• Ermöglichen, dass die Verriegelungselemente (31), ihre distale Position einzunehmen, wenn der Betätigungsring (71) in der vorgeschobenen Position ist;
**dadurch gekennzeichnet, dass**:
- das Buchsenelement (5) ferner Folgendes umfasst:
• einen Rückstellkolben (33), der radial zwischen dem Betätigungsring (71) und dem Buchsenkörper (21) eingefügt ist, der in Bezug auf den Buchsenkörper (21) beweglich ist und dazu bestimmt ist, die Verriegelungselemente (31) in ihre distale Position zurückzustellen, wobei der Rückstellkolben (33) zwischen einer vorderen Position, in der die Verriegelungselemente (31) in ihrer distalen Position sind, und einer hinteren Position, in der der Rückstellkolben (33) die Verriegelungselemente (31) zwischen ihrer distalen und ihrer proximalen Position frei beweglich lässt, beweglich ist, und
• ein elastisches Element (43), das eine Rückstellkraft ausübt, die dazu neigt, den Rückstellkolben (33) in seine vordere Position zurückzustellen; und
- wobei der Betätigungsring (71) konfiguriert ist, um den Rückstellkolben (33) in seine hintere Position anzutreiben, sodass der Rückstellkolben (33) keine Rückstellkraft auf die Verriegelungselemente (31) ausübt, wenn der Betätigungsring (71) von seiner vorgeschobenen Position in seine zurückgezogene Position verstellt wird.

2. Buchsenelement (5) nach Anspruch 1, wobei der Betätigungsring (71) konfiguriert ist, um den Rückstellkolben in seine hintere Position, weg von den Verriegelungselementen (31), anzutreiben, wenn der Betätigungsring (71) von seiner vorgeschobenen Position in seine zurückgezogene Position verstellt wird.

3. Buchsenelement (5) nach einem der Ansprüche 1 oder 2, wobei der Rückstellkolben (33) ein Rückstellring ist, der gegenüber dem Buchsenkörper (21) entlang der mittleren Achse (X5) verschiebbar beweglich ist und dazu bestimmt ist, die Verriegelungselemente (31) unter der Wirkung der Rückstellkraft in ihre distale Position zurückzustellen, wenn der Rückstellring an den Verriegelungselementen (31) anliegt.

4. Buchsenelement (5) nach einem der vorherigen Ansprüche, wobei der Buchsenkörper (21) einen Anschlag des Rückstellkolbens (33) in seiner vorderen Position bildet.

5. Buchsenelement (5) nach einem der vorherigen Ansprüche, wobei:
- die Innenhülse (75) eine proximale Wand (78) umfasst, durch die die Innenhülse (75) die Verriegelungselemente (31) von ihrer distalen Position in ihre proximale Position antreibt, wenn der Betätigungsring (71) von seiner vorgeschobenen Position in seine zurückgezogene Position verstellt wird;
- der Rückstellkolben (33) eine geneigte Vorderseite (34) umfasst, mittels derer der Rückstellkolben (33) in der Lage ist, an den Verriegelungselementen (31) anzuliegen; und
- die geneigte Vorderseite (34) oder die proximale Wand (78) von den Verriegelungselementen (31) entfernt gehalten wird, um eine Verstellung der Verriegelungselemente (31) zwischen der geneigten Vorderseite (34) und der proximalen Wand (78) zu zuzulassen, wenn der Betätigungsring (71) von seiner vorgeschobenen in seine zurückgezogene Position verstellt wird,
und wobei die proximale Wand (78) vorzugsweise um einen Winkel zwischen 20 Grad und 70 Grad, insbesondere 45 Grad, in Bezug auf die mittlere Achse (X5) geneigt ist.

6. Buchsenelement (5) nach einem der vorherigen Ansprüche, wobei jedes Verriegelungselement (31) zwischen seiner proximalen Position und seiner distalen Position entlang einer jeweiligen Verstellachse (X28) beweglich ist, die in Bezug auf die mittlere Achse (X5) um einen Winkel (A28) zwischen 20 Grad und 70 Grad, vorzugsweise gleich 45 Grad, geneigt ist.

7. Buchsenelement (5) nach einem der vorherigen Ansprüche, wobei die Verriegelungselemente (31) an der Innenhülse (75) anliegen, wenn die Verriegelungselemente (31) in einer distalen Position sind.

8. Buchsenelement (5) nach einem der vorherigen Ansprüche, wobei jedes Verriegelungselement (31) an einem entsprechenden ringförmigen Anschlag (29) des Buchsenkörpers (21) anliegt, wenn das Verriegelungselement (31) in distaler Position ist.

9. Buchsenelement (5) nach einem der vorherigen Ansprüche, wobei der Rückstellkolben (33) konfiguriert ist, um an dem Betätigungsring (71) anzuliegen, wobei der Rückstellkolben (33) dazu neigt, den Betätigungsring (71) unter der Wirkung der Rückstellkraft in die vorgeschobene Position zurückzustellen, wenn der Rückstellkolben (33) an dem Betätigungsring (71) anliegt.

10. Buchsenelement (5) nach einem der vorherigen Ansprüche, wobei:
- die Innenhülse (75) bildet eine vordere Innenwand (77) zylindrischer Form zentriert auf die mittlere Achse (X5) bildet;
- der Buchsenkörper (21) eine hintere Innenwand (79) bildet, die einen Abschnitt des Einführkanals (27) definiert, wobei die hintere Innenwand (79) eine zylindrische Form aufweist, die auf die mittlere Achse (X5) zentriert ist; und
- die vordere Innenwand (77) und die hintere Innenwand (79) den gleichen Durchmesser haben und in einer Linie zueinander angeordnet sind.

11. Aufnahmeelement (5) nach einem der vorherigen Ansprüche, wobei jedes Verriegelungselement (31) wie folgt gebildet ist:
- durch eine jeweilige Kugel, oder
- durch eine jeweilige zylindrische Rolle.

12. Buchsenelement (5) nach einem der vorherigen Ansprüche, wobei das Buchsenelement (5) Folgendes umfasst:
- einen mittleren Kolben (51), der in dem Einführkanal (27) angeordnet und in Bezug auf den Buchsenkörper (21) befestigt ist, wobei der mittlere Kolben (51) eine erste Vorderseite (56) aufweist; und
- einen Absperrschieber (61), der radial zwischen dem Einführkanal (27) und dem mittleren Kolben (51) eingefügt ist und in Bezug auf den Buchsenkörper (21) zwischen einer vorgeschobenen Position, in der der Absperrschieber (61) den Einführkanal (27) fluidisch absperrt, und einer zurückgezogenen Position, in der der Absperrschieber (61) den Einführkanal (27) fluidisch freigibt, beweglich ist, wobei der Absperrschieber (61) eine zweite Vorderseite (62) aufweist, wobei sich die erste Vorderseite (56) und die zweite Vorderseite (62) in derselben Ebene senkrecht zu der mittlere Achse (X5) erstrecken, wenn der Absperrschieber (61) in der vorgeschobenen Position ist.

13. Fluidkupplung, die zum Verbinden von unter Druck stehenden Fluidleitungen (1, 2) bestimmt ist, die Fluidkupplung umfassend ein Buchsenelement (5) nach einem der vorherigen Ansprüche und ein komplementäres Steckerelement (4), für das das Buchsenelement (5) konfiguriert ist, gekoppelt zu werden, wobei das Steckerelement (4) einen Steckerkörper (11) umfasst, der konfiguriert ist, um in dem Einführkanal (27) des Buchsenkörpers (21) durch die Innenhülse (75) hindurch aufgenommen zu werden, um die Verriegelungselemente (31) in ihre proximale Position zu schieben, wenn der Steckerkörper in dem Einführkanal (27) aufgenommen ist, und um mit den Verriegelungselementen (31) zusammenzuwirken, wenn die Verriegelungselemente (31) in distaler Position sind, um ein axiales Herausziehen des Steckerkörpers (11) aus dem Einführkanal (27) zu verhindern.

14. Fluidkupplung nach Anspruch 13, wobei der Steckerkörper (11) Folgendes umfasst:
- einen Bund (81);
- eine erste Fläche (82), die vor dem Flansch (81) gebildet ist und dazu in der Lage ist, die Verriegelungselemente (31) in ihre proximale Position zurückzudrücken, wenn das Steckerelement (4) in dem Einführkanal (27) des Buchsenkörpers (21) aufgenommen ist, wobei die erste Fläche (82) vorzugsweise eine konische Form hat, die zu der Vorderseite des Steckerelements (4) hin konvergiert.
- eine zweite Fläche (85), die an der Rückseite des Flanschs (81) gebildet ist und in der Lage ist, mit den Verriegelungselementen (31) zusammenzuwirken, wenn die Verriegelungselemente (31) in einer distalen Position sind, um ein axiales Herausziehen des Steckerkörpers (11) aus dem Einführkanal (27) zu verhindern, wobei die zweite Fläche (85) vorzugsweise unter einem Winkel (A85) zwischen 20 Grad und 70 Grad, z. B. 45 Grad, in Bezug auf eine mittlere Achse (X4) des Steckerelements (4), die entlang des männlichen Körpers definiert ist, geneigt ist, wobei die mittlere Achse (X4) des Steckerelements (4) und die mittlere Achse (X5) des Buchsenelements (5) koaxial sind, wenn der Steckerkörper (11) in dem Einführkanal (27) des Buchsenkörpers (21) aufgenommen ist.

15. Fluidkupplung nach Anspruch 14 in Verbindung mit Anspruch 5, wobei die zweite Fläche (85) des Steckerkörpers (11) und die proximale Wand (78) der Innenhülse (75) des Buchsenelements (5) in Bezug auf die mittlere Achse (X4, X5) ihres jeweiligen Stecker- (4) oder Buchsenelements (5) um einen gleichen Winkel (A85, A78) geneigt sind, wobei dieser Winkel (A85, A78) vorzugsweise 45 Grad ist.

## Claims

1. A female element (5), for a fluid connection designed for joining pressurized fluid lines (1, 2), the female element (5) being configured to be coupled with a complementary male element (4), belonging to the fluid connection, the female element (5) comprising:
- a female body (21), defining an insertion channel (27) of the male element (4), the insertion channel (27) defining a central axis (X5) of the female body (21);
- locking elements (31), which are received in respective housings (28) arranged in the thickness of the female body (21), each housing (28) being inclined relative to the central axis (X5) and emerging in the insertion channel (27), each locking element (31) being movable relative to the female body (21), between a distal position, in which said locking element (31) protrudes radially into the insertion channel (27), and a proximal position, in which said locking element (31) is withdrawn from the insertion channel (27); and
- a maneuvering ring (71), which surrounds the female body (21) and which is translatable relative to the female body (21) along the central axis (X5), between a forward position and a withdrawn position, the maneuvering ring (71) comprising an inner sleeve (75) that is at least partially received in the insertion channel (27), the inner sleeve (75) being configured to:
• drive the locking elements (31) to their proximal position, when the maneuvering ring (71) is moved from its forward position to its withdrawn position,
• prevent the locking elements (31) from adopting their distal position when the maneuvering ring (71) is in the withdrawn position, and
• allow the locking elements (31) to adopt their distal position when the maneuvering ring (71) is in the forward position;
**characterized in that**:
- the female element (5) further comprises:
• a return plunger (33), which is inserted radially between the maneuvering ring (71) and the female body (21), which is movable relative to the female body (21) and which is intended to return the locking elements (31) toward their distal position, the return plunger (33) being movable between a forward position, in which the locking elements (31) are in their distal position, and a rear position, in which the return plunger (33) leaves the locking elements (31) freely movable between their distal position and their proximal position, and
• a resilient member (43), which exerts a return force tending to return the return plunger (33) toward its forward position; and
- the maneuvering ring (71) is configured to drive the return plunger (33) toward its rear position, such that the return plunger (33) does not exert any return force on the locking elements (31) when the maneuvering ring (71) is moved from its forward position toward its withdrawn position.

2. The female element (5) according to claim 1, wherein the maneuvering ring (71) is configured to drive the return plunger toward its rear position, away from the locking elements (31), when the maneuvering ring (71) is moved from its forward position toward its withdrawn position.

3. The female element (5) according to one of claims 1 or 2, wherein the return plunger (33) is a return ring that is translatable relative to the female body (21), along the central axis (X5), and designed to return the locking elements (31) toward their distal position under the action of the return force when the return ring bears against the locking elements (31).

4. The female element (5) according to any one of the preceding claims, wherein the female body (21) constitutes a stop of the return plunger (33) in its forward position.

5. The female element (5) according to any one of the preceding claims, wherein:
- the inner sleeve (75) comprises a proximal wall (78), by means of which the inner sleeve (75) drives the locking elements (31) from their distal position to their proximal position, when the maneuvering ring (71) is moved from its forward position to its withdrawn position;
- the return plunger (33) comprises an inclined front face (34), by means of which the return plunger (33) is able to abut against the locking elements (31); and
- the inclined front face (34) or the proximal wall (78) is kept at a distance from the locking elements (31), so as to allow a movement of the locking elements (31) between the inclined front face (34) and the proximal wall (78) when the maneuvering ring (71) is moved from its forward position to its withdrawn position and wherein the proximal wall (78) is preferably inclined relative to the central axis (X5), by an angle of between 20 degrees and 70 degrees, in particular equal to 45 degrees.

6. The female element (5) according to any one of the preceding claims, wherein each locking element (31) is movable between its proximal position and its distal position along a respective movement axis (X28), which is inclined relative to the central axis (X5), by an angle (A28) between 20 degrees and 70 degrees, preferably equal to 45 degrees.

7. The female element (5) according to any one of the preceding claims, wherein, the locking elements (31) bear on the inner sleeve (75), when the locking elements (31) are in the distal position.

8. The female element (5) according to any one of the preceding claims, wherein, each locking element (31) bears on a respective annular stop (29) of the female body (21), when said locking element (31) is in the distal position.

9. The female element (5) according to any one of the preceding claims, wherein the return plunger (33) is configured to bear against the maneuvering ring (71), the return plunger (33) tending to return the maneuvering ring (71) toward the forward position under the action of the return force, when the return plunger (33) bears against the maneuvering ring (71).

10. The female element (5) according to any one of the preceding claims, wherein:
- the inner sleeve (75) forms a front inner wall (77), of cylindrical shape centered on the central axis (X5);
- the female body (21) forms a rear inner wall (79), delimiting a part of the insertion channel (27), the rear inner wall (79) being of cylindrical shape centered on the central axis (X5); and
- the front inner wall (77) and the rear inner wall (79) are of equal diameter and are arranged in the extension of one another.

11. The female element (5) according to any one of the preceding claims, wherein each locking element (31) is formed:
- by a respective ball, or
- by a respective cylindrical roller.

12. The female element (5) according to any one of the preceding claims, wherein the female element (5) comprises:
- a central piston (51), arranged inside the insertion channel (27) while being stationary with respect to the female body (21), the central piston (51) having a first front face (56); and
- a closing slide valve (61), radially inserted between the insertion channel (27) and the central piston (51), while being movable relative to the female body (21) between a forward position, in which the closing slide valve (61) fluidly closes the insertion channel (27), and a withdrawn position, in which the closing slide valve (61) fluidly frees the insertion channel (27), the closing slide valve (61) having a second front face (62), the first front face (56) and the second front face (62) extending in a same plane perpendicular to the central axis (X5) when the closing slide valve (61) is in the forward position.

13. A fluid connection, designed to join pressurized fluid lines (1, 2), the fluid connection comprising a female element (5) according to any one of the preceding claims and a complementary male element (4), with which the female element (5) is configured to be coupled, the male element (4) comprising a male body (11) that is able to be received in the insertion channel (27) of the female body (21) through the inner sleeve (75), to push the locking elements (31) into their proximal position when the male body is received in the insertion channel (27), and to cooperate with the locking elements (31) when the locking elements (31) are in the distal position, to prevent the axial removal of the male body (11) from the insertion channel (27).

14. The fluid connection according to claim 13, wherein the male body (11) comprises:
- a flange ring (81);
- a first surface (82),formed in front of the flange ring (81) and being able to push the locking elements (31) back into their proximal position when the male element (4) is received in the insertion channel (27) of the female body (21), the first surface (82) preferably having a conical shape converging toward the front of the male element (4);
- a second surface (85), able to cooperate with the locking elements (31), while the locking elements (31) are in the distal position, to prevent the axial removal of the male body (11) from the insertion channel (27), the second surface (85) preferably being inclined by an angle (A85) of between 20 degrees and 70 degrees, for example equal to 45 degrees, relative to a central axis (X4) of the male element (4) defined along the male body, the central axis (X4) of the male element (4) and the central axis (X5) of the female element (5) being coaxial when the male body (11) is received in the insertion channel (27) of the female body (21).

15. The fluid connection according to claim 14, in combination with claim 5, wherein the second surface (85) of the male body (11) and the proximal wall (78) of the inner sleeve (75) of the female element (5) are inclined relative to the central axis (X4, X5) of their respective male (4) or female (5) element, by an equal angle (A85, A78), this angle (A85, A78) preferably being equal to 45 degree
